# EUROPEAN PATENT SPECIFICATION

(11) **EP 2 923 197 B1**
(45) Date of publication and mention of the grant of the patent: **24.06.2020**
(21) Application number: 13802114.2
(22) Date of filing: 14.11.2013
(51) Int. Cl.: G01N 21/85, B07C 5/34, G01N 21/47

(54) **AN OPTICAL SAMPLING APPARATUS AND METHOD FOR UTILIZING THE SAMPLING APPARATUS**
OPTISCHE ABTASTVORRICHTUNG UND VERFAHREN ZUR VERWENDUNG DER ABTASTVORRICHTUNG
APPAREIL D'ÉCHANTILLONNAGE OPTIQUE ET PROCÉDÉ D'UTILISATION DES APPAREILS D'ÉCHANTILLONNAGE

(30) Priority: 20.11.2012 FI 20126214
(43) Date of publication of application: 30.09.2015
(73) Proprietor: GrainSense Oy, 90590 Oulu (FI)
(72) Inventor: MARBACH, Ralf, 90590 Oulu (FI)
(74) Representative: Laine IP Oy
(86) International application number: PCT/IB2013/060140
(87) International publication number: WO 2014/080322

(56) References cited:
- US-A- 4 806 764
- US-A- 5 256 886
- US-A- 5 256 886
- US-A- 5 353 790
- US-A1- 2003 034 281
- US-A1- 2010 309 463
- KUHN J ET AL: "INFRARED-OPTICAL TRANSMISSION AND REFLECTION MEASUREMENTS ON LOOSE POWDERS", REVIEW OF SCIENTIFIC INSTRUMENTS, AIP, MELVILLE, NY, US, vol. 64, no. 9, 1 September 1993 (1993-09-01), pages 2523-2530, XP000395623, ISSN: 0034-6748, DOI: 10.1063/1.1143914

## Description

### FIELD OF INVENTION

The invention relates to a method and measurement apparatus to spectroscopically measure the chemical composition of samples from natural substances or fabricated products, in particular particulate samples, like pharmaceutical powder blends or granules.

### BACKGROUND OF INVENTION

Spectroscopic methods are often used to perform quantitative chemical analyses. Goal is to determine the concentrations of chemical components making up the sample. The results are displayed in concentration units, e.g., in [gram/Liter] or weight percent [%w].

Quantitative optical measurements on particulate samples like powders are much more difficult in practice than measurements on optically homogenous samples like most gases or liquids. A number of effects can cause the optical response to become nonlinear, or worse, non-stationary. A measurement system is said to be linear if the amplitude of the measured response, e.g., in absorbance units [AU], scales proportionally to the concentration of the analyte of interest. The measurement is stationary if the scaling factor also stays constant over time. In practice, non-stationarity is often the worse of the two problems, because non-stationarity can prevent quantitative measurement even in cases where the dynamic range of the analyte concentration is small, like in many online applications. Non-stationary response can be caused by physical and/or chemical effects. The latter ones are often called "matrix effects". When performing spectrometric analysis on granule samples, the physical effects are often the dominant source of non-stationarity.

In the case of absorbance based spectroscopic measurements, the three most important physical effects causing nonlinear and/or non-stationary response on granule samples are as follows:
- The parallel-paths effect, which is often dominant in NIR measurements (near-infrared). The name of this effect refers to the fact that measurement light can progress through a granule sample along different routes, viz., through particles or through the air between particles. As a result, the light reemitted from the sample and measured by the measurement instrument can experience different amounts of path length through particles of component A, B, etc., depending on the micro-geometry of the particles at the time of measurement. In a flowing granule sample, the micro arrangement changes from one moment in time to the next, which is noticed as random noise. Over longer time periods, the moving average of the situation can drift and thus introduce non-stationarity.
- The scatter coefficient effect, which is often strong in the NIR. When the particle size distribution in a granule sample varies over time, the effective scatter coefficient of the sample and therefore the path length of the "effective cuvette" formed inside the sample vary. The same happens due to other effects changing the effective scatter coefficient, e.g., onset of powder flow increasing the average distance between particles and thus the amount of particle surface area participating in the scattering of light.
- The hidden-mass effect, which is often strong in IR (infrared) and UV (ultraviolet) measurements. The hidden-mass effect is present in particulate samples, like powder blends, granules or liquid substances, in particular turbid liquids. When the absorption coefficient is large, only a part of the sample mass is probed by the measurement light and another part is "shielded" from the light by absorbing layers on top of the hidden mass. This occurs, for example, if individual particles are large and shield their own inside mass. When the particle size changes with time, the amplitude of the effect is modulated, which in turn causes a non-stationary response.

For emission-type measurements, like Raman and fluorescence, the parallel-paths effect is reduced but still exists as a second-order effect accompanying the new effect of self-absorption.

In process applications, a further very important practical challenge is "representative sampling". Usually only a small part of the material can be measured and there can be uncertainty as to whether that sample really represents the composition of the whole granular material. Whereas non-linearity can be an acceptable nuisance, non-stationarity and non-representativeness are serious effects that can render a measurement "non-quantitative", or more exactly speaking, unreliable to a degree that quantitative measurement becomes too risky in practice.

The parallel-paths and hidden-mass effects can also occur in non-scattering samples, but this is rare. Usually, these effects only occur in scattering samples, including granule samples where one or more of the above mentioned effects always occur.

The optical sampling methods used nowadays on granule samples are identical to those used in general on scattering samples. The optical sampling is usually arranged in diffuse reflection geometry and sometimes in diffuse transmission geometry. In both cases, the optical power arriving at the photo detector with the sample in place is compared to the power arriving at the detector with a reference sample in place (which could be air). When used on granule samples like powder blends, the optical sampling interfaces of the prior art suffer from a high risk of non-stationary optical response and often also from the fact that much less than 100% of the flowing sample is measured, which in turn raises questions of representative sampling. Another problem with prior art interfaces arises from the need to calibrate NIR or other spectrometers. For calibration, the true values of the component concentrations [%w] in the optically probed sample volume need to be known, i.e., the true values of the analyte "surface concentrations", which is very challenging in the case of granule samples.

Therefore, there is a need in industry for a method to accurately quantify the chemical composition of granule samples like powder blends, especially when flowing as, e.g., in online measurement applications. In the following, the word "powder" will sometimes be used in a generic sense meaning all types of particulate samples or samples comprising or consisting of particles or granules of a characteristic size smaller than ca. 2 mm. The need for a better sampling method is particularly urgent when trying to change from batch to continuous production, as is currently happening in the pharmaceutical industry. Other industries facing similar challenges include chemistry, food and food supplements, cosmetics, and paint.

Moreover, pharmaceutical industry is moving towards continuous manufacturing. The ultimate goal is the real-time-release (RTR) of the manufactured products. The need for real-time quality control systems - which are embedded in the process equipment and which facilitate fast and accurate assessment of the critical quality attributes (mainly concentration of the active pharmaceutical ingredient, API) of the product as well as process control - will thus increase in future.

Also agricultural products are harvested or processed in great quantities. A real time control on the ingredients of granular agricultural products, such as barley or maize, is also of considerable importance. The same accounts for chopped, sliced, milled or otherwise processed agricultural products, where the size of the smallest physical sample elements has been reduced and which can be similarly treated like powders in pharmaceutical production processes. For decision taking in agriculture it is important to measure the crop ingredients in static setups and obtain the results as fast as possible to proceed with the corresponding farming measures without delay. Ideally, the measurement can be carried out at the field where the sample was acquired.

In the past integrating spheres have been used in applications, where absorption at 400nm of flowing drinking water has been measured. In the method a freely falling stream of clear water including some disturbing particles is guided downwards through an integrating sphere in order to avoid contact to an otherwise necessary optical window, thus achieving reliable long term operation without the risk of window contamination (Non-contact, scattering-independent water absorption measurement using falling stream and integrating sphere; Ingo Fecht and Mark Johnson; Meas. Sci. Technol. 10 (1999) 612-618).

Kuhn et al ("Infrared-optical transmission and reflection measurements on loose powders", Review of scientific instruments, vol. 64, no. 9, pages 2523-2530, Sept. 1993, ISSN: 0034-6748, DOI 10.1063/1.1143914), discloses an optical transmission experiment on a sample outside an integrating sphere.

US 2003/0034281 A1 discloses a method for rapidly sorting irregularly shaped metal particles randomly located on a conveying belt, whereby an integration chamber is used.

US 2010/0309463 A1 discloses a scattered-light spectroscopy system for collecting light scattered from a sample. The collection efficiency is to be improved by placing the sample 20 into a multiple pass cavity allowing a better identification of the sample material.

US 5353790 A discloses an optical measurement method to determine quantitative concentrations of biological substances inside biological tissues using an integrating sphere.

US 5256886 B discloses an apparatus for optically detecting contamination in particles of low optical-loss material, wherein a laser is used to illuminate the low optical-loss material particles, and an intensity of light is measured to determine whether contaminants are present.

### SUMMARY OF THE INVENTION

The inventors recognized that the common analysis of the composition of particulate samples by utilizing NIR or sometimes Raman measurements employs either diffuse reflection or sometimes diffuse transmission geometries for sampling. Both of these geometries present the sample to the instrument as a "thick bed" of powder and consequently try to measure concentration (e.g. in units of [%w]), not content (e.g. in [mg]). Both geometries are in practice affected by the above mentioned disturbance effects. In transmission measurements, the need for a "thick" sample arises because of the needs (a) to create a near-uniform sample thickness without any "holes" and (b) to sample a representatively large portion of the sample.

The inventors further realized that liquid samples, in particular turbid liquid samples, also bear the problem of sampling a representative large portion of the sample, in particular, if the liquid sample is inhomogeneous or contains or consists in part of particles.

An object of the invention is to provide a new and cost effective optical measurement apparatus for measuring a chemical composition of liquid or granular or particulate samples, in particular, powder streams. The utilized measurement method in the measurement apparatus eliminates physical effects that often make the optical measurement of static and flowing samples, in particular powder streams, non-quantitative and/or time non-stationary.

The objects of the invention are achieved by a measurement apparatus where liquid or particulate samples, in particular, a continuous stream of powder, flows through an integrating cavity in such a way that the sample is "optically thin". The chemical composition of the powder is measurable by making a quantitative analysis of an absorbance spectrum caused by the powder in the integrating cavity.

Another object of the invention is the measurement of granules having a size and absorption that bear a hidden mass effect already within a single sample element, such as a kernel of maize, for instance. Such granules vary in size, shape and consistency, but are basically similar to each other and generally having nearly constant hidden mass.

An advantage of the invention is that the measurement results are linear and time stationary.

Another advantage of the invention is that the integrating cavity can be made large enough so that in many applications virtually 100% of the sample, in particular the powder stream can be conveyed through or brought into the measurement cavity (save some minor sample loss mechanisms like dust etc.). Another advantage is that virtually 100% of the sample material present in the cavity at any moment is optically probed and analyzed. Singularly and especially in combination, the last two advantages mean that the measurement can be fully representative.

Another advantage of the invention is that the effective path length problem inside a sample is avoided.

Another advantage of the invention is that the hidden mass effect is not a problem when single particle absorbance of a particulate sample is below roughly 0.2 absorbance units (AU).

A further advantage of the invention is that also the parallel-path effect is fully avoided.

The method according to the invention, in particular an online measuring method, for measuring a chemical composition of a sample, in particular a stream of powder, comprising at least two chemical components is characterized in that said method comprises the steps:
- illuminating an integrating cavity by a light source;
- bringing the sample into an integrating cavity, in particular conveying said stream through said integrating cavity as an optically thin sample;
- detecting an optical signal from said integrating cavity using a sensor; and
- indicating the chemical composition of the sample by spectral analysis; whereby the sample forms an optically thin layer in at least one dimension inside the integrating cavity.

The idea of the invention is basically as follows: A sample, for example a stream of powder, is guided through or brought into an integrating cavity, such as an integrating sphere. The radiance inside the integrating cavity is reduced by the absorbance of the particles inside the integrating cavity. By making the sample, in said example that is the stream of flowing powder, optically thin in at least one dimension, e.g., in the form of a thin layer of flowing or static powder, granules, particles, or liquids. In case of the liquid sample, the optical thinness can be achieved by dividing the stream of the liquid sample into several currents, for example, by using a multiple of grooves for dividing and guiding the currents though the integrating cavity. Said currents may be optically thin in more than one dimension.

Once the sample is optically thin, the amplitude of the radiance becomes substantially independent of the location, orientation, shape and scattering behavior of the sample. All disturbing effects threatening the quantitativeness of the result can be eliminated and a fully representative and reliable measurement of the contents or composition of the sample, such as a powder mix, becomes possible.

A sample is optically thin if the hidden mass effect is below approximately 40%. Nearly ideal measurement conditions can be found at hidden mass values of less than about 10%.

The hidden mass of a given sample can be measured using a simple experiment. First, the absorbance signal of the sample is recorded in the original state of the sample. Second, in the case of granular samples consisting of more than one sample element, the sample elements are separated from each other (assuming this is not already done) and re-measured inside the integrating cavity. Comparing the amplitudes of the two absorbance spectra determines the hidden mass effect due to element shading that affected the original sample. Finally, by chopping the one or more sample elements into smaller and smaller pieces and remeasuring the separated pieces in the integrating cavity, the full extent of the hidden mass effect can be determined. With each chopping the hidden mass is reduced until the pieces are so small to only act as a transmissive filter. In this state the hidden mass is 0% and the probed mass is 100%. In the 800 to 1050 nm wavelength range, the asymptotic reduction is very quick in practice. For example, if large barley kernels weighing around 53 mg are used as sample elements, they only require one longitudinal cut to nearly eliminate the (already negligibly small) hidden mass effect shown by the whole kernels. In case of liquid samples, a similar procedure applies, that is to say, the one or more volume elements making up the original state of the sample inside the integrating cavity need to be reshaped into a state of the sample having a higher number of smaller and smaller, for example, thinner and thinner, sample volume elements.

It does not matter how the said one dimension of the optically thin layer is oriented inside the integrating cavity. The sample simply needs to be exposed to the diffuse light of the integrating cavity. The sample may also be optically thin in more than the one dimension as well, which is the case, for example, when whole barley kernels, which are individually optically thin, are located separate from each other in the integrated cavity or when a stream of powder particles, which individually are optically thin, falls through the integrating cavity in a rain drop type flow.

In this document the term optical thinness in one direction is used synonymously to the term optical thinness in one dimension. Optical thinness in at least one direction is needed to establish optical thinness of the sample, i.e. reduce its hidden mass to below approximately 40 %.

The sensor may also be substituted or accompanied by other detecting means, such as optical components, like lenses or filters, or a sensor array, whereby every sensor of the sensor array is assigned a defined wavelength range.

Advantageously, the integrating cavity is configured to generate or receive an optically thin layer of the sample at least partially consisting of particles or a layer of a liquid. Said particles may be particles of a powder or crystalline or granulated particles. Said liquid may consist of a mineral oil or medical drug solved in water.

According to the invention the sample may in various way form the optically thin layer. It is merely relevant that the material of the sample is formed, treated or processed in a way that allows the formation of the optical thin layer in at least one dimension. Therefore the layer can be formed by a multiple of sample elements, granules or particles forming an accumulation or a drop-like structure, but also by a certain amount of a liquid forming a planar or cylindrical stream. Also large (in respect to the magnitude of the optical thin layer) one-piece samples, like an apple or other fruit, may be cut or treated otherwise to form a thin slice being optically thin.

Advantageously, the integrating cavity is configured to generate or receive an optically thin layer of the sample, the sample being a sample of an agricultural product, such as juice or oil, in particular olive oil, or grain samples. Fortunately and so far unrecognized, many important types of grain samples, including wheat and barley, can achieve the ideal sampling situation of being optically thin relatively easily because, when measured in the third overtone NIR wavelength range, their kernels are small enough to be optically thin individually. By arranging these kernels with a minimum distance to each other inside the optically integrating cavity, the whole sample therefore becomes optically thin. For example, when measuring barley kernels in this way the hidden mass for optical wavelengths near 1000 nm is only approximately 13 % even for relatively large kernels of approximately 53 mg weight. The hidden mass of wheat kernels is typically less than 10 %, the kernels having around 40 mg of weight. Last but not least, rice, having a kernel weight of between 19 to 25 mg, has hidden mass of only about 5 %.

Samples comprising pellets or other granular agricultural products, on the other hand, where the sample elements are not individually optically thin, such as maize or apples, need to be chopped or squeezed or otherwise reduced in size in order to generate an optically thin sample. In the third overtone NIR wavelength region, many samples become optically thin once the geometrical thickness of the material is thinner than about 3 millimeters. Once this thin-plate geometry is realized, for example, by slicing an apple or by chopping or pressing maize kernels, optical thinness is achieved in one dimension, which is also sufficient to achieve thinness of the whole sample. Once a sample is arranged in an optically thin way, its mass acts as a predominantly transparent sample for the diffused light inside the integrating cavity. For very small sample elements, such as the kernels of flax, even several layers on top of each other still generate an optically thin sample, since the light passes through a multiple of these sample elements with small attenuation only. The above situations also apply to non-agricultural samples having particles with a hidden mass, such as capsules or the like.

Also a liquid sample can be quite problematic when analyzed optically, because of a multiple of absorption bands turning the liquid strongly absorbing and hence optically "black". Therefore much of the liquid mass is potentially invisible for the optical analysis (hidden-mass effect). For example, every water based liquid, but also oily samples will display strong absorption brands in the Near Infrared (NIR). Interestingly, the method is deployable with every liquid containing scattering elements, such as suspended matters or gas bubbles. Also, suspensions or emulsions, such as milk can be used as samples.

In a preferred embodiment the sample constitutes a stream through the integrating cavity, said stream being conveyed through the integrating cavity. This embodiment is not only convenient to continuously monitor the product of a production plant or machine spectrally, but also allows to average over much of the substance of the sample being conveyed through the integrating cavity.

Advantageously, the method also comprises a step for measuring the mass flow rate of the stream of the sample by integrating an output of a mass sensor over a predetermined time interval for generating an integrated mass reading and using said reading to scale the result of the optical analysis. This is particularly advantageous for a continuous optical analysis and real time application implemented by an online optical measurement apparatus or other real time applications.

In a preferred embodiment the sample consists of chopped hay, silage, wood pellets, food pellets or another chopped agricultural product. The chopping allows to reduce the size of the sample elements or particles and thereby gives access to the otherwise hidden mass of the particles. Some samples gain access to the optical thinness by chopping, others may only improve upon it. Whole-kernel maize, for example, can be arranged in layers which - independent on the arrangement of the granules - do not reach optical thinness. Chopped maize, however, can be arranged to form an optically thin layer or can be conveyed though the integrating cavity, preferably as maize powder, as an optically thin sample. The same accounts for non-agricultural products as well.

Advantageously, the output signal from the sensor is integrated for a predetermined time for getting a measured spectrum from a defined amount of the sample. The defined amount can be a sample load inside the integrating cavity or a section of a sample stream. The corresponding means for converting an output of the sensor into a measured spectrum of the received light may comprise or consist of a computer or an application-specific integrated circuit.

In a preferred embodiment the indication of composition is accomplished by calculating an absorbance spectrum from the measured spectrum and applying a chemometric method to the absorbance spectrum. Also other methods might be applied here, for example, a calibration with known absorbance spectra. The comparison of the measured spectra with the calibration data enables a rough analysis of the sample allowing fast decisions, for example, within a quality control monitoring process of a production plant.

In a preferred embodiment the spectral analysis is a quantitative analysis of the measured spectrum. The method indicates the chemical composition of said amount by quantitative analysis of said spectrum.

Advantageously, the optically thin layer of the sample is accomplished by one of the following ways:
- the sample falling through a vertical tube; this way the method is easily carried out and the corresponding optical measuring apparatus is easier designable.
- The sample flowing on a flat bottom of a rectangular tube having an oblique slope position;
- the sample flowing in parallel grooves along the bottom of a rectangular tube having an oblique slope position.

Said slope can be adjusted to accommodate the flow of a liquid sample or the flow of a particulate sample, preferably a stream of powder.

The optical measuring apparatus according to the invention for indicating a chemical composition of a sample, in particular a stream of powder, comprising:
- an optical measurement cavity;
- means for bringing or placing the sample into the optical measurement cavity;
- a light source configured to deliver light of an intended wavelength range into the optical measurement cavity;
- a sensor configured to receive light from the optical measurement cavity;
- means for a converting an output of the sensor into a measured spectrum of the received light; and
- means for indicating the composition of the sample by spectral analysis, characterized in that the optical measurement cavity is an integrating cavity configured to generate or receive the sample as in at least one dimension optically thin layer.

Advantageously, the optical measuring apparatus comprises means for indicating the composition of said powder or other sample by quantitative analysis of the measured spectrum. Such means may include a computer, a screen or other equipment of the sort.

In a preferred embodiment the integrating cavity is configured to generate or receive an optically thin layer of the sample, the sample at least partially consisting of particles or of a liquid. Advantages have been discussed previously in regard to the optical measuring method.

In a preferred embodiment the integrating cavity is configured to generate or receive an optically thin layer of the sample, the sample at least partially consisting of an agricultural product. Advantages have been discussed previously in regard to the optical measuring method.

In a preferred embodiment the optical measuring apparatus is configured to convey the sample into the integrating cavity as a stream. In case of a powder stream sample the means for bringing or placing the sample into the optical measurement cavity are advantageously implemented by
- means for feeding said stream of powder through said optical measurement cavity, preferably said means for feeding are configured to guide the powder particles through said integrating cavity as an optically thin sample, and
- means for receiving said stream of powder from the optical measurement cavity.

In a preferred embodiment the means for bringing the sample into the optical measurement cavity assure optical thinness of the sample. This can be achieved by forming or positioning the sample in such a way that at least in one dimension the sample is optically thinned out to reduce the hidden mass sufficiently.

In a preferred embodiment the optical measurement apparatus is configured to accomplish the spectral analysis by calculating an absorbance spectrum from the measured spectrum and applying a chemometric method to the absorbance spectrum.

In a preferred embodiment the measuring apparatus is an optical online measuring apparatus. The online feature enables an immediate presentation of the result of the spectral analysis to the user. The result might be printed or electronically displayed on a screen or stored in a memory. Alternatively, the online feature enables the measuring apparatus to supply the result to a computer network, for example an intranet or the internet, for remote access.

In a preferred embodiment the integrating cavity comprises a round tube having a white, diffusely reflective portion on an interior surface or on the outer surface at least in the middle of the round tube. This way the conveying means and the analyzing components are advantageously integrated when dealing with a sample stream.

In a preferred embodiment the integrating cavity comprises a rectangular tube having a white, diffusely reflective interior surface. The rectangular tube allows an even settlement of the particles of the sample, such as a powder. Also liquid samples may be distributed evenly for analysis.

In a preferred embodiment the interior surfaces are covered by a layer of glass in order to protect the white, diffusely reflective interior during operation or cleaning.

In a preferred embodiment the light source is positioned inside the optical measurement cavity for better compactness and effective illumination of the sample.

In a preferred embodiment a bottom side of the rectangular tube includes several longitudinal V-shaped or rectangular grooves that are configured to separate and guide the sample to flow as an optically thin sample along the bottom side of the rectangular tube. Like this particulate or liquid samples, and sample elements as well, can be divided to form one or more optical thin layers. The hidden mass is reduced in a similar way to the spatially separated particles of a particulate sample described earlier.

In a preferred embodiment the measurement apparatus is configured for letting the sample fall or travel through the round tube due to gravity or overpressure, respectively. Both can lead to a simpler structure and better compactness of the apparatus. In both cases a steady flow is established.

In a preferred embodiment the apparatus is configured for letting the sample flow along the bottom side of the sloped integrating cavity. Again, for liquid and particulate samples optimum analysis conditions can be created depending on the hidden mass of the sample. A greater steepness of the slope leads to a smaller thinness and vice versa, in other words, the slope can be adjusted to reach the desired optical thinness of the flowing sample. The invention includes a further method for measuring a chemical composition of a sample comprising at least two chemical components, comprises the steps:
- illuminating an integrating cavity by a light source,
- conveying the sample through the integrating cavity,
- detecting an optical signal from the integrating cavity (1,2a) using a sensor, and
- indicating the chemical composition of the sample by spectral analysis, whereby the sample is a granular sample consisting of sample elements that are similar to each other, in particular agricultural samples, such as maize kernels, and whereas the sample elements are passed through the integrating cavity at a distance from each other.

The invention further includes the insight that optical thinness is generally advantageous, but is not always required. In case of granular products consisting of smallest separable elements that are chemically and/or physically very similar to each other, for example, maize kernels or many man-made pellets, the advantage of optical thinness is reduced if the sample elements are located separate from each other during the measurement in the integrating cavity, because the structure of the sample elements is known to be very reproducible. Particularly in case of some agricultural samples, such as man-made pellets, whole-kernel grains with seeds too large to be individually optically thin, like maize kernels or peanuts or kidney beans, optical thinness is not obligatory if the structure of the individual kernels or pellets is known to be reproducible.

In the case of the agricultural grains and in particular maize, the inside structure is known from the biological point of view and the effect of the contained hidden mass is therefore reproducible from kernel to kernel and does not need to be probed as long as the outer part of the granule or pellet is sufficiently characterized by the transmitted and reflected diffuse light. In case of the pellet the consistency is also known, at least, in a statistic fashion. Hence the hidden mass therein does not carry more useful information, either. Advantageously, the granules or pellets offer the opportunity of probing similar units, which are each individually different, but still very much alike each other. In a statistical perspective this is also unproblematic.

Advantageously, the sample elements are individually analyzed when passing through the integrating cavity, for example, by shooting the sample elements one at a time. During the travel time through the optically integrating cavity, the optical analysis is carried out for a single element, such as a granule or pellet, individually.

In the case that individual sample elements are analyzed, advantageously, analysis data is used to generate a histogram. The histogram gives a good account on the kernel-to-kernel variability of the sample elements, which have passed through the integrating cavity.

Some advantageous embodiments of the invention are presented in the dependent claims.

Further scope of applicability of the present invention will become apparent from the detailed description given hereafter. However, it should be understood that the detailed description and specific examples, while indicating preferred embodiments of the invention, are given by way of illustration only, since various changes and modifications within the scope of the invention will become apparent to those skilled in the art from this detailed description.

Other favorable embodiments and advantageous implementations of the invention are described in the drawings or the dependent claims.

### BRIEF DESCRIPTION OF THE DRAWINGS

The present invention will become more fully understood from the detailed description given herein below and accompanying drawings which are given by way of illustration only, and thus are not limitative of the present invention and wherein
- FIG 1a: shows a schematical representation of the basic idea of the measurement method and measurement arrangement according to the invention;
- FIG 1b: shows basic functional elements of one advantageous embodiment of the measurement apparatus;
- FIG 1c: shows some functional elements of a second advantageous embodiment of the measurement apparatus;
- FIG 2: shows an exemplary cross section of the integrating cavity of the measurement apparatus of FIG 1b;
- FIG 3: shows a first exemplary cross section of the integrating cavity of the measurement apparatus of FIG 1c;
- FIG 4: shows a second exemplary cross section of the integrating cavity of the measurement apparatus of FIG 1c;
- FIG 5: shows a third exemplary cross section of the integrating cavity of the measurement apparatus of FIG 1c;
- FIG 6a: shows a first input/output arrangement of the measurement apparatus of FIG 1c;
- FIG 6b: shows a second input/output arrangement of the measurement apparatus of FIG 1c;
- FIG 7: shows as an exemplary flow chart the main steps of the optical measurement process;
- FIG 8: shows an optically integrating sphere for a non-flowing liquid sample or particulate sample, and
- FIG 9: shows an optically integrating sphere for the analysis of a flowing, liquid or particulate sample.

Same reference numerals refer to same components in all FIG.

### DETAILED DESCRIPTION OF PREFERRED EMBODIMENTS

In the following description, considered embodiments are merely exemplary, and one skilled in the art may find other ways to implement the invention. Although the specification may refer to "an", "one" or "some" embodiment(s) in several locations, this does not necessarily mean that each such reference is made to the same embodiment(s), or that the feature only applies to a single embodiment or all embodiments. Single feature of different embodiments may also be combined to provide other embodiments.

The application discloses a method and optical measurement apparatus for measuring samples, such as, liquids, but also powders and granular materials, which, in the following, are often summarily called "powder."

When used in this summary fashion, the term "powder" is used herein to describe mixtures of man-made particles with characteristic size smaller than roughly 2 mm, where the mixtures consist of several chemical components and where the individual particles can consist of one or more components. A typical example of the first case, each particle consisting of only one chemical component, is a pharmaceutical powder blend consisting of crystalline particles grown from the pure components. If that blend of crystalline particles is granulated, e.g., using a roller compaction process, then each "particle" consists of several chemical components and we have an example of the second case, each particle consisting of a mix of chemical components. In summary, by "powder" is meant an agglomeration of man-made particles designed to create a granular material with desired properties. Likewise, unless mentioned otherwise, the meaning of the word "particle" in this application includes particles made from a single chemical component and particles made from several components, e.g., granules.

The need to improve the accuracy and reliability of today's optical analysis methods for determining the chemical composition of flowing streams of particulate sample, e.g., NIR diffuse reflection spectroscopy applied to a pharmaceutical powder blend, can be achieved by improving the optical sampling interface. The present invention achieves this in the following way.

First, the powder stream is guided to flow through an integrating sphere or cavity wherein the sample is bathed in a nearly-uniform and nearly-isotropic field of probing radiation. Second, the stream of particles is geometrically arranged such that the sample inside the cavity is optically thin in at least one dimension. Optical thinness means, physically, that the radiation density within each particle inside the cavity (exactly: n² * N_{S}, where n is the refractive index of the particle and N_{S} is the radiance [W sr⁻¹ cm⁻²] within the particle) is nearly-constant throughout the volume of the particle.

The experimental procedure for exactly determining the degree of optical thinness of a given sample was described above. A rule of thumb for particulate samples is explained in the following. In practice, optical thinness of particulate samples is achieved when two conditions are met. First, the individual particles of the powder are small enough so that, when performing a conventional transmission measurement (mini-scale, thought experiment) through a box-shaped particle of typical dimensions, the measured absorbance is smaller than about 0.2 absorbance units (AU) for at least one orientation of the box. Second, the multiple particles flowing through the cavity at any one time are spatially arranged so that the particles are not touching each other or, if touching and thereby starting to shadow each other from the uniform and isotropic field inside the cavity, do not build up "super-particles" thicker than roughly 0.2 AU. The geometrical thickness [mm] is scaled by the absorption coefficient(s) [AU mm⁻¹] at the user-selected optical wavelength(s) in order to give the optical thickness in [AU].

The measurement apparatus according to the invention utilizes a variation of a measurement cell that is known as an integrating sphere. The integrating sphere is an optical component having a hollow spherical cavity which interior is covered with a diffuse, white reflective coating. The integrating sphere includes also holes for input and output ports. A relevant property of the integrating sphere is a uniform scattering or diffusing effect. Light rays incident on any point on the inner surface are, by multiple scattering reflections, distributed equally to all other points. The effects of the original direction of light are thereby minimized. An integrating sphere may be thought of as a diffuser which preserves optical power but destroys spatial information.

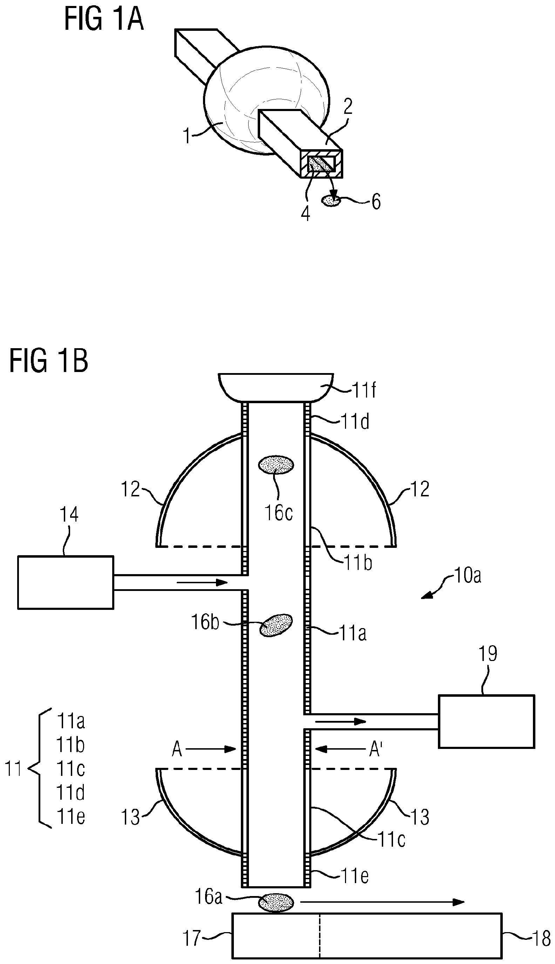

Figure 1a shows an example of the measurement principle that may be utilized in the measurement apparatus according to the invention. In the depicted example the sample powder 6 flows down advantageously through a glass tube 2 which itself may traverse in an oblique slope an integrating sphere 1 somewhere along its length. The layer 4 of the sample powder at the bottom of tube 2 is kept optically thin by choosing the inner dimensions of glass tube 2 appropriately for the given flow rate. In practice this means that the powder 6 flowing through tube 2 has to form one or more of the following types of flow, namely,
- a "shallow river" type flow, where the "depth" of the river is optically thin, or
- a "raindrop" type flow, where the particles alias raindrops flow individually and are optically thin in at least one dimension, or
- a "many narrow channels" type flow, where multiple narrow lines of powder stream down tube 2 and where the "depth" of the individual channels can be optically thick as long as the "width" of each channel is optically thin. In other words, each channel must have at least one of the two dimensions, depth or width, be optically thin.

The words "depth" and "width" are used herein in the same way as conventionally applied relative to gravity when describing flowing water. Examples of the different types of flow will be given below. Mixtures between the types can exist, e.g., when a shallow-river type flow is guided over an edge becoming a "waterfall" and during the fall turns into a mixture between a shallow-river type flow and raindrop type flow. In the example of Fig.1a, a shallow-river type flow or a mixture between a shallow-river and raindrop type flow (river with "holes") can be realized by adjusting (a) the width of tube 2 and (b) the inclination angle of tube 2 and thereby the flow speed according to the given flow rate [kg/h]. As long as the powder particles roll down along a side of tube 2, the rectangular cross section of tube 2 helps to produce an optically thin flow. For inclination angles near 90 degrees, i.e., for near vertical fall, the powder stream will tend to form a raindrop type flow and the advantage of the rectangular shape diminishes. The integrating sphere 1 of the example in Fig.1a advantageously has an inside diameter at least ten times larger than the largest linear dimension of the glass tube 2 in the cross-direction. The spherical shape of integrating sphere 1 is not essential, i.e., integrating sphere 1 can be replaced by an integrating cavity with a different shape.

In a second advantageous embodiment of the invention the glass tube 2 is coated on the outside by a coating that diffusely scatters light or the surface is roughened to cause the same effect. The scattering on the surface of glass tube 2 supports or replaces the action of the integrating sphere 1.

In a third advantageous embodiment the tube 2 is manufactured from a plastic that by itself causes diffuse reflection. The material may be for example Spectralon® that is a solid thermoplastic based upon PTFE (Polytetrafluoroethylene). Spectralon® exhibits a diffuse reflectance up to 95% from 250-2500nm and 99% from 400-1500nm.

In the above mentioned embodiments tube 2 itself may compose a modification of an integrating sphere. In these embodiments a separate integrating sphere 1 is not needed.

Typical powder flow rates in continuous pharmaceutical production processes are from 1 to 100 kg/hour. In one industrial example, a powder "river" 2.5 cm wide and 1 cm deep flows down a chute at 10 cm/s. In that example an NIR probe measures the powder from below by diffuse reflection, which, however, only probes approximately 5% of the total material passing the measuring spot.

Assuming a bulk density of 0.7 g/cm³, the above volume flow of 25 cm³/s corresponds to a mass flow of 63 kg/hour. This is at the higher end of the range expected by the machine supplier industry which advertises continuous mixers/granulators down to about 1 kg/hour.

However, even 63 kg/hour can still be relatively easily handled by the present invention, e.g., by widening the flow channel of the rectangular tube 2 to 15 cm and increasing the flow speed to 50 cm/s. Those measures in combination reduce the average thickness of the flowing powder "river" to about 300 µm nominal, i.e., to single particle level.

In order for the powder layer to be optically thin, the particles being measured are not allowed to be in the "absorbance shadow" created by neighbouring particles. Fortunately, for most industrial cases the particle sizes involved are small enough so that, at least in the NIR range, the individual particles do not shadow their own inside material. In the basic realization of Fig. 1a, optical thinness can therefore advantageously be achieved by widening and/or accelerating the powder flow so that a shallow-river type flow with about single particle depth is formed. No adverse effects result if the shallow-river type flow thins out further into a raindrop type flow with a thickness of 0 or 1 particle, because the "holes" in the stream have no effect on the measurement.

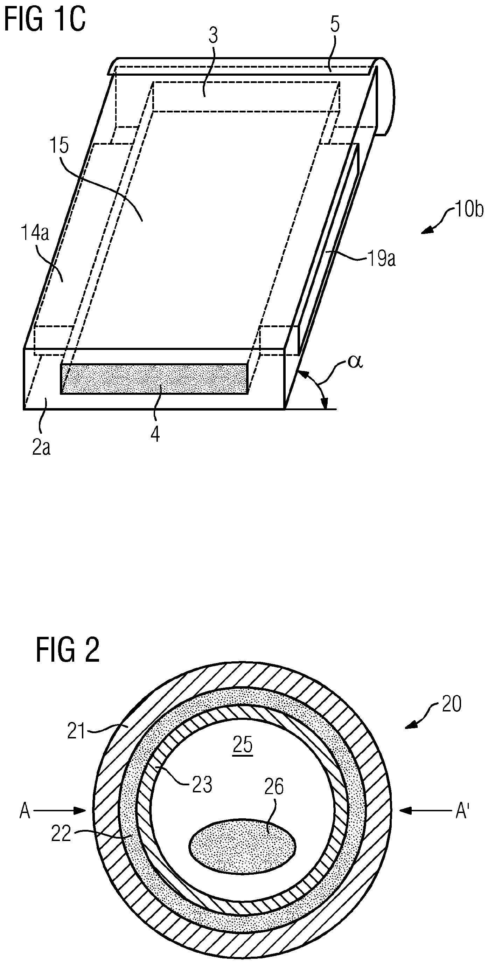

Figures 1b and 1c depict two alternative solutions for realizing an integrating cavity according to the invention. The embodiment of Fig. 1b is designed to be advantageously utilized in a vertical or nearly-vertical orientation, where gravity can be used as the powder driving force. Other orientations are possible but require a separate driving force, e.g., pneumatics. In the vertical embodiment the powder falls through the integrating cavity according to the invention. In that embodiment the integrating cavity has advantageously a circular cross section, which can be built from standard components.

The embodiment of Fig. 1c comprises a rectangular box-type integrating cavity 2a. It is designed to be utilized advantageously in a vertical or slanted position, for example 45 degrees compared to the horizontal plane. In that embodiment the powder may flow as a "shallow river" along the bottom of the integrating cavity 2a. As an alternative a "many-narrow-channels" type flow can be realized by diverting the powder particles into many parallel flowing channels. This can be achieved e.g. by machining several parallel grooves into the bottom surface of the integrating cavity 2a. Also, said embodiments of integrating cavity 2a are applicable for liquid samples flowing down the inside bottom surface of cavity 2a, as well. The slope and said grooves can be designed to create the required optical thinness.

FIG 1b illustrates main components of a first advantageous embodiment of the measurement apparatus 10a according to the invention. The optical measurement apparatus 10a advantageously comprises an integrating cavity that has an elongated shape. Its longitudinal axis has the same direction as the mass flow to be measured. The integrating cavity includes advantageously a round tube 11 and concave mirrors 12 and 13. The tube 11 comprises advantageously interlinked parts 11a, 11b, 11c, 11d and 11e that are explained later.

The measurement apparatus 10a advantageously comprises also a light source 14 that may be for example a pulsed NIR source like an LED or a QTH lamp (Quartz Tungsten Halogen), and a sensor 19 that may be for example a photo detector or spectrograph. The sensor 19 comprises advantageously also light intensity integrating means and means for indicating composition of the measured sample.

The measurement apparatus 10a advantageously comprises also a feeding arrangement 11f and an output arrangement including a mass sensor or weighing machine 17 and some conveyor means 18. The actual housing of the measurement apparatus 10a is not depicted in the example of Fig. 1b.

The tube 11 and mirrors 12 and 13 compose a first embodiment of the integrating cavity according to the invention. The tube 11 is divided into three different functional parts 11a, 11b and 11c. The other parts of the tube 11 are part 11d that is a feeding part of tube 11, and part 11e that is an output part of tube 11. Part 11a and mirrors 12 and 13 form the integrating cavity.

In the middle of the tube 11 (reference 21 in Fig. 2) there is quite a long diffusely scattering part 11a. The inner wall of that part 11a is advantageously coated by some white reflective material (reference 22 in Fig. 2). The reflective material on the inner wall may advantageously be covered by a glass layer (reference 23 in Fig. 2) for preventing the reflective coating from breaking during the use of the measurement apparatus.

Alternatively, tube 11 may consist only of a glass tube 23 coated on the outside by a diffusely reflective material 22.

The tube 11 comprises on both sides of the diffusely scattering part 11a a transparent part 11b near the input of the tube 11 and a transparent part 11c near the output of the tube 11. These transparent parts 11b and 11c are surrounded by concave mirrors 12 and 13 that advantageously can have a substantially hemispherical shape. The transparent tube part 11b is surrounded by the mirror 12 and the transparent tube part 11c is surrounded by the mirror 13. The mirrors 12 and 13 reflect most of the light that has escaped from the diffusely scattering part 11a back to the diffusely scattering part 11a and, in this way, minimize optical losses at the ends of the integrating cavity.

Most of the boundary surface of the integrating cavity formed in apparatus 10a is defined by the diffusely reflective material 22 covering part 11a of tube 11. The advantage of mirrors 12 and 13 is that they define the exact boundaries of the integrating cavity also in the flow direction (indicated by the dashed lines in Fig. 1b). Mirrors 12 and 13 are advantageously hemispherical in shape with the equator planes defining the "ends" of the integrating cavity (dashed lines in Fig. 1b).

Mirrors 12 and 13 are not absolutely necessary for forming an integrating cavity and could be omitted or replaced with diffusely reflective components. This would form a more conventional design of an integrating cavity, in which all surfaces except the ports reflect diffusely. The disadvantage of such an embodiment, especially in the case of continuous powder flow, is that the optical losses experienced by the integrating cavity at the tube ends can vary over time depending on the "fill state" in the feeding and output ends of the tube 11. For example, if a larger-than-average amount of powder happened to be entering tube part 11d at a moment in time, the optical loss caused by this tube end would temporarily be reduced due to the increased diffuse reflection. This in turn would modulate the measured optical response to the sample inside the cavity. Still, if the flow rate of the powder is relatively constant over time and the squared diameter of tube 11 relatively small compared to the whole surface area of the cavity, then the modulation is small and such design can also provide the desired result of a stable optical response.

In the measurement apparatus 10a the light source 14 is connected to the diffusely scattering part 11a. Also the sensor 19 is connected to the diffusely scattering part 11a. The only limitation of their layout is that the output hole of the light source 14 and the input hole of the sensor 19 cannot be placed directly facing each other.

The tube 11 comprises at both ends of the tube connection parts 11e and 11d that advantageously are not transparent. They may e.g. also have a diffusely scattering coating. The tube part 11d connects the tube 11 to the feed box 11f and the tube part 11e connects the tube 11 to the output means that advantageously comprises the mass sensor 17 and the conveyor 18.

In Fig. 1b is also depicted a simplified feed box 11f. The feed box 11f may have some other structure and that the powder may be fed into the feed box in several alternative ways. For example there might be a conveyor that drops the powder to the feed box 11f. Also pressurized air may be utilized for pushing powder-like material to the feed box 11f, for example.

The wavelength range from approximately 800 to 1400 nm may advantageously be utilized in the invention. A Quartz Tungsten Halogen Lamp (QTH lamp)with or without a chopper wheel can be used as a light source 14. Alternatively, solid state sources like LEDs emitting in the NIR can be used as a light source 14. The solid state sources are advantageously pulsed, which results in two advantages. First, as in the case of a chopped QTH lamp, when the pulsed source is detected with a synchronous detector (lock-in), the electronic drift and 1/f noise are suppressed. Second, the pulsing can be adjusted to correspond to a certain amount of powder flowing through the measurement cell, e.g., in the case of pharmaceutical powders a fixed multiple of the unity dose. Adjusting the pulse duration, i.e., integration time, to a certain amount of powder passing through can be advantageous when analyzing and presenting the results. In general, what kind of a light source is utilized depends on the material that should be measured and analyzed in the optical measurement apparatus. Some examples of samples that can be analyzed by the measurement apparatus 10a are pharmaceutical powders and even whole tablets and capsules. Also agricultural seeds or grains, chopped hay or silage, food pellets, and wood pellets can be analyzed by measurement apparatus 10a.

It is also possible to use apparatus 10a for analyzing granular samples consisting of smallest elements that are very similar physically and chemically to each other, for example, pellets or some agricultural grains.

If the weighing machine 17 and conveyor means 18 are removed and the apparatus 10a is placed horizontally, said grains or pellets can be shot with overpressure through the integrating cavity at a distance from each other and also analyzed singly. Even with maize kernels, which have a volume and absorption characteristics to contain a considerable amount of hidden mass, a fairly accurate optical analysis is still possible, even in real time. This is possible because, given the great similarity in physical structure and chemical composition between the kernels, the effect of the hidden mass is quite reproducible from kernel to kernel and therefore can be empirically taken into account in the subsequent quantitative spectral analysis.

The sensor 19 has the capability to measure at least one and advantageously at least two wavelengths. An advantageous wavelength range, in which many good combinations of wavelengths for quantitative NIR spectroscopy can be found, is from 800 to 1400 nm. The sensor 19 averages over a predefined time the received single-beam spectrum where some wavelengths have been partly absorbed by the sample. The sensor 19 may advantageously comprise also some means for calculating an absorbance spectrum from said time averaged single-beam spectrum and applying chemometric methods to said absorbance spectrum for analyzing the composition of the measured sample.

In Fig. 1b the posture of the measurement apparatus 10a is substantially vertical. This means that the powder or granule particles, references 16a, 16b and 16c, fall through tube 11 assisted by gravity, forming an optically thin sample by raindrop type flow or as a mixture between raindrop type flow and shallow-river type flow. In that case the radiance inside tube 11, which is reduced by the absorbance of the particles 16b inside the integrating cavity, is substantially independent of the location and shape and scattering properties of particles 16b but is only dependent on the refractive index and number of absorbing molecules inside particles 16b. Also, the radiance inside tube part 11a is virtually independent of the particles 16a and 16c, which are located outside the measurement cavity formed by tube part 11a and mirrors 12 and 13. Because the sample of flowing powder 16b is kept optically thin, the parallel-paths effect, the hidden-mass effect, and the scatter-coefficient-effect are virtually eliminated and a fully representative and quantitative measurement of the contents of the powder flow or granule particles is achieved. Also, in the case of an optically thin sample, time averaging of the single-beam spectrum corresponds to time averaging of the absorbance spectrum.

The measurement apparatus 10a according to the invention is capable of measuring the contents [mg] of the sample, not just the concentrations [w%], because it probes virtually 100% of the material flowing in the measurement cavity. The exact flow conditions ("sample presentation") in the integrating cavity do not matter and can vary over time as long as the flow of the powder or granule samples stays optically thin.

As long as the sample flow is optically thin, the instantaneous absorbance signal produced by apparatus 10a is proportional to the number of absorbing molecules located inside the measurement cavity at that moment. The time averaged signal correspondingly is proportional to an integral of the sample mass flow over that time interval. Chemometric analysis of the time averaged spectrum can further determine selectively the mass of the individual chemical components that have flown over that time interval, e.g., flow of component "A" was A [mg], flow of component "B" was B [mg], etc. The content-proportional signals (A, B, C, etc., in e.g. [mg]) can be output directly, as a selective scale, so to speak, or they can be transformed into concentration signals in different ways. First, the signals A, B, C, etc. can be expressed in a ratio, e.g., the concentration of "A" can be computed as, A/(A + B + C), which in the case that all or virtually all of the mass of the powder blend can be optically measured, e.g., A + B + C > 90% of total mass, is substantially the same as a mass concentration. In general, any combination of individual or summed content-proportional signals can be expressed in a ratio.

Second, the total mass of the sample can be determined with a separate mass sensor, e.g., weighing machine 17, producing a signal for the total sample mass passing through tube 11 during the integration time of the sensor 19. The true mass concentrations can then be determined by dividing the content-proportional output signals of apparatus 10a by the total mass signal, e.g., the mass concentration of "A" is computed as A/total mass, mass concentration of "B" is computed as B/total mass, etc.

Alternatively one of several well-known multivariate calibration methods can be applied to determine the concentrations directly from the absorbance spectrum, i.e., without first determining the content-proportional signals.

The computations above produce concentration results for the powder stream inside the measurement cell. Under normal circumstances, the flow speed of a particle does not depend on the chemical composition of the particle. In other words, the masses of the different chemical components "A", "B", "C", etc. all flow with the same speed at any one point in the process, including the measurement cell, resulting in all spending the same amount of time traversing the measurement cell. Consequently, the concentrations measured inside the measurement cell are identical to the concentrations measured at different positions in the stream, e.g., further downstream. In practice, achieving identical flow speed of components "A", "B", "C", etc. is usually simple because in many powder transport situations the particles are thoroughly mixed and flow with similar speed anyway, independent of which component(s) they are made from. In those rare cases where a difference in the average particle speed between components exists, e.g., when two components "A" and "B" traverse the measurement cell in two spatially separate streams, the difference in residence time inside the cell can be included into the concentration computations in the evident way.

Similar considerations as discussed above for concentration measurement also apply to mass flow measurement. Since the content-proportional output signals A [mg], B [mg], etc. are proportional to the number of absorbing molecules in particles 16b inside the measurement cell, but independent of their flow speed through the measurement cell, the flow speed must be known in order to be able to scale the content-proportional signals [mg] into flow rate proportional signals [kg/hour]. Usually, all particles flow with the same speed [cm/s] and the scaling factor is then the same for all components. The scaling factor can be derived from knowing the speed [cm/s] or measuring it with a separate sensor (not shown), or from knowing the mass flow [kg/hour] or measuring it with a separate sensor.

One way to measure the mass flow through the measurement apparatus 10a is to utilize some kind of mass sensor or weighing machine 17 located below the output part 11e of the tube 11. After the weighing event the weighed-in material sample 16b may advantageously be moved away from the weighing machine 17 by some conveyor system 18. Instead of the weighing machine also some X-ray or capacitive type mass sensor may be utilized for detecting the mass flow through the measurement apparatus 10a.

In the case of a continuous powder flow the content-proportional output signals are advantageously sampled at regular time intervals. If the flow rate is approximately constant, the time interval for signal integration can be chosen so that each set of results (A [mg], B [mg], C [mg], etc.) corresponds to a certain amount of total mass, e.g., a pharmaceutical unity dose. In the case of individual product units passing through the measurement apparatus 10a, e.g., pharmaceutical capsules or feed pellets or wheat kernels or maize kernels, the time intervals for producing the content-proportional output signals are synchronized to the unit flow, which itself can be at regular or irregular intervals. If the product units appear at irregular time intervals, the individual measurements must be triggered. Triggering can be achieved using a dedicated sensor (not shown), e.g. a photoelectric sensor, or the sensor 19 itself can be used for triggering. In the case of individual product units passing through sequentially and being analyzed individually, it is also possible to display the analysis results in histogram form.

Figure 1c illustrates an example of an integrating cavity 2a utilized in a second advantageous embodiment of the measurement apparatus. The measurement apparatus 10b discloses also input and output means, light emitting means and a sensor that are not depicted in Fig. 1c. The integrating cavity 2a of Fig. 1c is designed to be utilized advantageously in a sloped use position. That is depicted by an angle α against a fictitious horizontal plane.

The integrating cavity 2a of Fig. 1c may be machined advantageously from Spectralon®. The cross section of the integrating cavity 2a of the embodiment in Fig. 1c is advantageously rectangular. The integrating cavity 2a has advantageously an elongated box-shaped structure. The length of the integrating cavity 2a may be for example 100 mm, the width about 50 mm and height about 15 mm (overall diameters). The material to be measured is taken into account when sizing the hollow core 15 of the integrating cavity 2a, i.e., the height and width of the hollow core. In the embodiment of Fig. 1c the powder flows along the bottom side of the hollow core 15 of the integrating cavity 2a. The longitudinal axis of the hollow core 15 of the integrating cavity 2a has the same direction as the mass flow to be measured.

The integrating cavity 2a has a material feeding opening 3 on the first short side of the integrating cavity 2a. Correspondingly, on the opposite second short side there is an output aperture 4. The dimensions of the feed opening 3 and output aperture 4 advantageously correspond to the height and width of the hollow core 15.

In a first long side of the integrating cavity 2a there is a first opening 14a whereto the light input means 14 are configured to be connected. On the opposite long side (second long side) there is a second opening 19a whereto the light output means are configured to be connected. Both first and second openings 14a and 19a are advantageously rectangular. The height of these openings advantageously corresponds to the height of the hollow core 15. The width of these openings corresponds advantageously to approx. 80% of the length of the integrating cavity 2a. In the above mentioned exemplary integrating cavity 2a the width of the openings 14a and 19a may be about 80 mm.

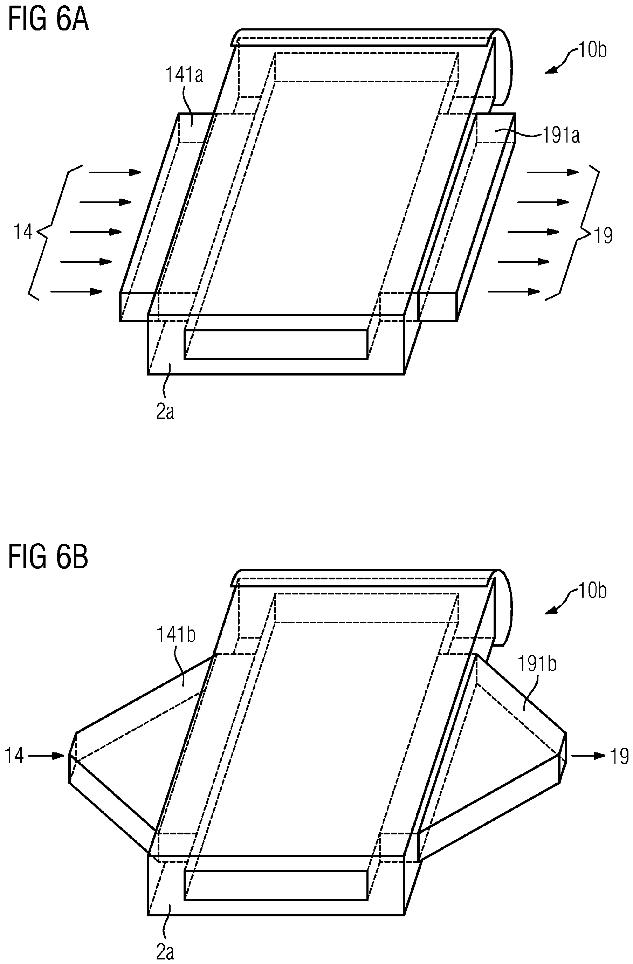

At both ends of the integrating cavity 2a there are advantageously concave mirrors. For the sake of clarity only the mirror 5 "above" the feeding opening 3 is depicted in Fig. 1c. The same kind of a mirror is advantageously assembled also "below" the output aperture 4 of the integrating cavity 2a. These mirrors prevent light from escaping from the hollow core 15 of the integrating cavity 2a. The mirrors may have openings to let the powder flow in and out. Some examples of utilized light sources 14 and light detection components that are configured to be installed to the openings 14a and 19a are explained later in connection with Figures 6a and 6b.

Figure 2 depicts an exemplary cross section 20 (A-A') of the integrating cavity of the measurement apparatus 10a. The cross section is located in the diffusely scattering part 11a. The dimensions of the different layers are emphasized for the sake of clarity. In the example of Fig. 2 the tube 21 has a round cross section. As explained in connection with Fig. 1b, a part of the tube 21 is coated inside by diffusely scattering material 22. For protecting the diffusely scattering material 22 from the flowing powder, a layer of transparent glass 23 covers the scattering material 22. In the hollow core 25 of the tube is depicted an exemplary particle or granule sample 26 the chemical content of which will be analyzed when the granule sample 26 moves through the tube 21.

As an alternative the outer surface of the glass tube 21 may be painted diffuse white. In that embodiment layers 22 and 23 are not needed. A similar construction can be achieved by drilling a hole into a block of Spectralon® or similar material and then inserting glass tube 21 into the hole.

Alternatively, the tube 21 may also be made only from Spectralon® or similar material by drilling a hole through the material and guiding the powder through it. In that embodiment, however, the diffuse white reflective surface of the integrating cavity is not protected from the powder flow. As long as the powder flow is not oily and too abrasive, this can be robust enough in practice.

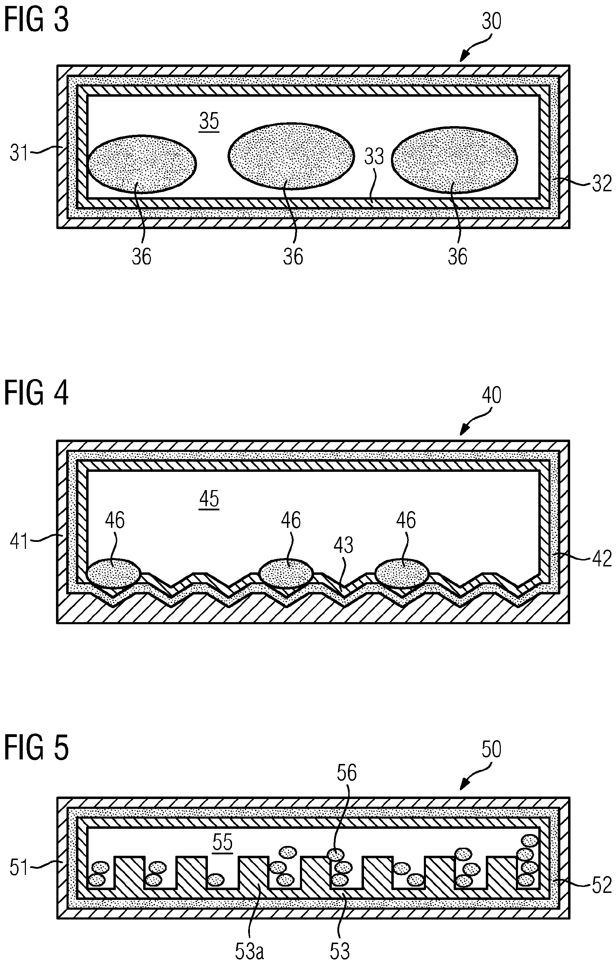

Figure 3 depicts an advantageous cross section 30 of a second embodiment of the integrating cavity. The cross section 30 of the second embodiment of the integrating cavity is advantageously rectangular. Also in Fig. 3 the dimensions of the different layers are emphasized for the sake of clarity. In the example of Fig. 3 the tube 31 has a rectangular cross section. Also in this embodiment at least a part of the tube 31 is coated inside by diffusely scattering material 32. For protecting the diffusely scattering material 32 from the flowing powder a layer of transparent glass 33 covers the scattering material 32.

In the hollow core 35 are depicted, as an example, granule samples 36 the chemical content of which will be analyzed when the granule samples 36 move through the tube 31. As shown in Fig. 3, the granule samples 36 do not hide each other in the height dimension of the tube. This means that the sample flow is thin in that direction of the tube. The light source output and light detection input may advantageously be placed either on the side walls or on the upper and lower side of the rectangular tube 31.

The tube 31 may be utilized also in an oblique slope position. In this embodiment the powder or granule samples flow with virtually constant speed from the feed box arrangement along the bottom side of tube 31 to the optional mass sensor. The movement of the powder sample may result from gravity and/or overpressure in the feed box arrangement.

Figure 4 depicts another advantageous cross section 40 of the second embodiment of the integrating cavity having a rectangular hollow core. Also in Fig. 4 dimensions of the different layers are emphasized for the sake of clarity. In the example of Fig. 4 the tube 41 has a substantially rectangular cross section. The tube 41 has on the bottom side several longitudinal V-shaped grooves. The V-shaped grooves guide the powder or granule samples 46 when they are moving along the bottom side of the tube 41. The V-shaped grooves assist in keeping the powder flow thin or keep the granule samples side by side when they are moving in the hollow core 45 of the tube 41. That way the powder flow or granule sample flow may be kept thin in the height direction inside the measurement apparatus.

Also in this embodiment at least a part of tube 41 is coated inside by diffusely scattering material 42. For protecting the diffusely scattering material 42 a layer of transparent glass 43 covers the diffusely scattering material 42.

In the hollow core 45 are depicted, as an example, granule samples 46 the chemical content of which will be analyzed when the granule samples 46 move through the tube 41. As shown in Fig. 4, the granule samples 46 do not hide each other in one dimension of the tube 41 (i.e. the height direction in Fig. 4) and this behavior is assisted by the V-shaped grooves. This means that the powder flow or granule sample flow is thin in the height direction of the tube 41. Also in this embodiment the light source output and light detection input may advantageously be placed either on the side walls or on the upper and lower side of the rectangular tube 41.

The tube 41 may be utilized also in an oblique slope position. The liquid sample or powder or granule samples will then flow with virtually constant speed from the feed box arrangement along the grooves in the bottom of tube 41 to the optional mass sensor. The movement may result from gravity and/or overpressure in the feed box arrangement.

Figure 5 depicts a third advantageous cross section 50 of the second embodiment of the integrating cavity having a substantially rectangular hollow core. Also in Fig. 5 the dimensions of the different layers are emphasized for the sake of clarity. In the example of Fig. 5 the tube 51 has advantageously a rectangular cross section.

Also in this embodiment at least a part of the tube 51 is coated inside by diffusely scattering material 52. For protecting the diffusely scattering material 52 a layer of transparent glass 53 is processed and placed above the scattering material 52. The glass layer 53 has at the bottom side of the hollow core 55 protrusions 53a that have a shape of a rectangular toothing. The rectangular toothing 53a defines longitudinal rectangular glass grooves on the bottom side of the hollow core 55.

The glass grooves guide the powder or granule samples 56 when they are rolling along the bottom side of tube 51. The glass grooves assist in keeping the powder flow thin or keep the granule samples side by side when they are moving in the tube 51.

In this embodiment the powder particles are allowed at least partly to overlap each other because scattered light can penetrate from the hollow core 55 of the integrating cavity into the powder filled glass grooves also from the side walls of the glass protrusions 53a. That way the powder flow or granule sample flow can be guaranteed to always stay optically thin in at least one direction. In other words, the flow is separated into multiple narrow channels that each can be optically thick in the depth direction but is optically thin in the width direction between glass protrusions 53a and receives measurement light from there.

In the cavity 55 are depicted, as an example, granule samples 56 the chemical content of which will be analyzed when the granule samples 56 move through the tube 51. As shown in Fig. 5, the powder particles or granule samples 56 do not hide each other in at least one dimension of the tube (i.e. sideward direction in Fig. 5) due to the rectangular glass grooves through which they flow. This means that the powder flow or granule sample flow is kept thin in the hollow core 55 of the tube 51. Also in this embodiment the light source output and light detection input may advantageously be placed on the side walls or on the upper and lower side of the rectangular tube 51.

The tube 51 may be utilized also in an oblique slope position. The powder or granule samples will then flow with virtually constant speed from the feed box arrangement along the grooves between protrusions 53a to the optional mass sensor. The movement may result from gravity and/or overpressure in the feed box arrangement.

The integrating cavity structures of Figures 3 and 4 may also be manufactured from Spectralon®. In that embodiment depicted layers 32, 33, 42, and 43 are not compulsory.

Figures 6a and 6b depict two examples of how the light source 14 and sensor 19 can be connected to the integrating cavity structure 2a of Fig. 1c.

These embodiments are useful when the integrating cavity is relatively small compared to the physical size of, e.g., the QTH bulb in light source 14, so that the bulb cannot be integrated directly into the integrating cavity. Location of the bulb inside the integrating cavity or directly approximate to a port 141a into the integrating cavity is a preferred way when the bulb is relatively small, so that light baffles or other arrangements known in the art can be used inside the cavity to eliminate direct illumination and achieve diffuse illumination of the sample inside the cavity. On the other hand, if the integrating cavity is relatively small compared to the physical size of, e.g., the light bulb in light source 14 or the photo detector in the sensor 19, then some form of connecting element must be used anyway and then it makes sense to design these elements in the form of additional light mixers in order to support the light mixing action of the small cavity.

Another situation where the embodiments of Figs. 6a and 6b are useful is when the integrating cavity structure 2a is to be connected to light source 14 or sensor 19 by optical fibers. Connection by optical fibers is often preferred because of the practical usefulness. In this case, the size ratio is reversed relative to the discussion above but the solution is the same. Since the diameters of optical fibers and fiber bundles are usually very small compared to the size of the integrating cavity (even a "small" integrating cavity), also in this case it makes sense to design the connecting elements in the form of additional light mixers in order to support the light mixing action of the cavity.

Figure 6a depicts an embodiment where additional integrating cavities 141a and 191a are utilized as input and output adapter. The additional integrating cavities are advantageously manufactured from Spectralon®. The hollow core of both additional integrating cavities is open from the side that is configured to be connected either onto the first opening 14a or onto the second opening 19a of the integrating cavity structure 2a in Fig. 1c. The opposite side is also open and/or configured to connect light guides like optical fibers.

The light source 14 is connected advantageously by several parallel light guides to the first integrating cavity 141a (i.e. an input integrating cavity). The height and width of the hollow core of the input integrating cavity 141a correspond to the height and width of the first opening 14a of the integrating cavity 2a in Fig. 1c. The length of the input integrating cavity 141a is advantageously about 30 mm.

The sensor 19 is advantageously connected by several parallel light guides to the second integrating cavity 191a (i.e. an output integrating cavity). The height and width of the hollow core of the output integrating cavity 191a correspond to the height and width of the second opening 19a of the integrating cavity 2a in Fig. 1c. The length of the output integrating cavity 191a is advantageously about 30 mm.

Figure 6b depicts an embodiment where light mixers 141b and 191b known in the art are utilized as input and output means of the integrating cavity 2a. The outer cover of the mixers 141b and 191b is shaped like a prism. A long side of the mixer, which is between the two other long sides of the mixer, is configured to be assembled against the integrating cavity structure 2a in Fig 1c. The hollow core of both mixers is open from the side that is configured to be connected either onto the first opening 14a or onto the second opening 19a of the integrating cavity structure 2a in Fig. 1c. The opposite short side of the mixers is also open and/or configured to connect light guides like optical fibers. The other four inner surfaces, which outline the hollow core of the mixers 141b and 191b, are mirror surfaces. Alternatively, only the two larger ones of these surfaces (top and bottom) are mirror surfaces and the two smaller surfaces (sides) can be made of other material, e.g., machined aluminum.

The light source 14 is connected advantageously by one light guide to the first mixer 141b (i.e. the input mixer). The height and width of the dimensions of the hollow core of the input mixer 141b correspond to the height and width of the first opening 14a of the integrating cavity structure 2a in Fig. 1c.

The sensor 19 is advantageously connected by one light guide to the second mixer 191b (i.e. an output mixer). The height and width dimensions of the hollow core of output integrating cavity 191a correspond to the height and width of the second opening 19a of the integrating cavity structure 2a in Fig. 1c.

The opening angle of mixers 141b and 191b, as seen from the short side, should not be larger than the opening angle (numerical aperture) of the connecting light beams or optical fibers, which in turn determines the minimum length of the mixers.

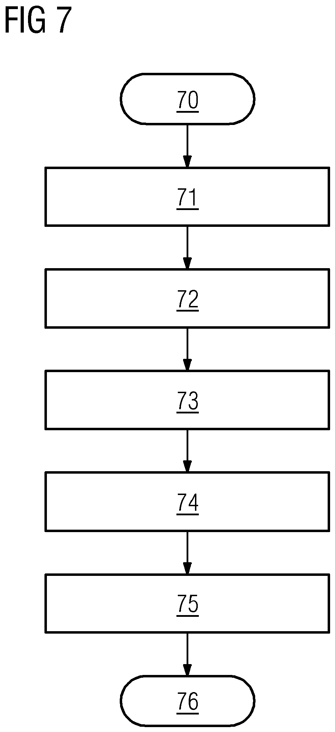

The main steps of the method according to the invention are shown as an exemplary flow chart in Fig. 7, which applies accordingly to a flowing sample stream or to any other flowing or stationary sample.

The optical measurement apparatus is activated in step 70 starting the the measurement process with the chemical analysis. Some examples of powder or granule samples whose composition can be analyzed by the method are a pharmaceutical powder mix, tablet or capsule.

In step 71, after activation, the integrating cavity of the optical measurement apparatus is illuminated by measurement light. Advantageously the light is a high density broadband source emitting in the near infrared region of the spectrum. The light source may be for example a pulsed NIR source or a QTH lamp. In this step the measurement apparatus is advantageously calibrated when the integrating cavity is empty.

In step 72 the powder or granule sample is conveyed through the integrating cavity keeping it thin at all times, advantageously with a substantially constant speed. At any time the optical thickness of the sample material present inside the cavity is kept optically thin.

In one advantageous embodiment the powder mix or granule samples are falling through a vertical tube that is a part of the integrating cavity due to gravity. Interestingly, also liquid samples may be passed through a vertical tube with or without touching the walls of the tube. In some cases the optical thinness can additionally be controlled by adjusting the sample viscosity or the sample temperature favorably. Alternatively, the liquid may be passed in a non-touching flow, whereas temperature again, changes the diameter of the flow and thereby enables the control of the layer thickness to achieve the corresponding optical thinness.

In another advantageous embodiment the powder mix or granule samples are flowing or rolling down as an optically thin material layer along the bottom of a rectangular integrating cavity. Advantageously the integrating cavity has an oblique slope position. In that embodiment gravity and/or air pressure difference between the input feeding and output means of the integrating cavity may be utilized in assisting a continuous flow of material through the integrating cavity.

In all the above mentioned embodiments the falling, flowing, rolling or otherwise moving sample material absorbs those wavelengths of the measurement light that are characteristic of the different chemical components of the powder mix or granule samples or liquid samples inside the integrating cavity.

In step 73 part of the optical field inside the integrating cavity is received by the sensor. The sensor may include for example a photo detector or spectrograph.

In step 74 the received light is integrated for a predetermined time or time averaged for getting an energy-proportional or "single-beam" spectrum of the received light. Because the measured sample material is always optically thin, the time averaged single-beam spectrum corresponds to the time averaged absorbance spectrum of the material.

In step 75 the chemical composition of the measured sample is analyzed by performing a quantitative analysis in which advantageously chemometric methods are applied to the absorbance spectrum of the material.

The measurement result of the powder mix or granule samples is then indicated in step 76. One or more chemical components can be analyzed and their selective mass results scaled and displayed in various ways, e.g., as the instantaneous mass inside the measurement cell (an appropriate unit would be [mg]) or as the instantaneous mass flow (e.g. in [kg/hour]) or as unity dose concentration (e.g. in [mg/mg]).

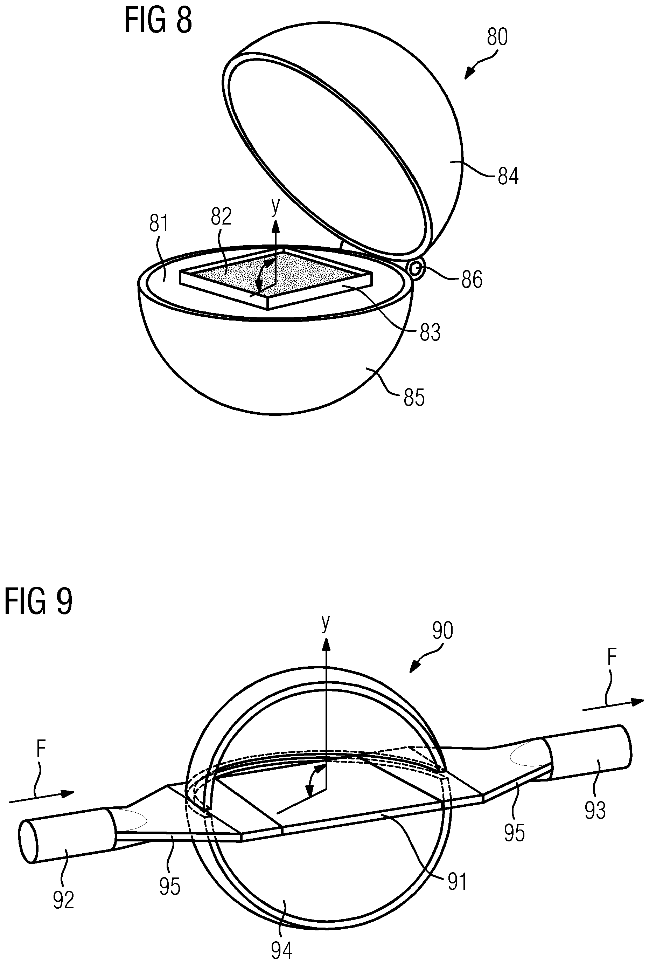

Figure 8 shows an embodiment with a non-flowing particulate sample 82 or, alternatively, a liquid sample, which is placed on a sample holder 83 inside the optically integrating cavity, constituted by the two half-spheres 84,85 connected by the hinge 86 to each other. The sample 82 is distributed evenly in the wide and shallow sample holder 83 to generate optical thinness in the dimension Y for the material sample 82 is made of. The sample 82 might be a scattering powder or also a scattering liquid, which is held in the sample holder 83 being shaped like a pot or a container. Preferably, sample holder 83 is made from non-absorbing material, for example, a borosilicate glass.

The measurement concept improves the representativeness of the NIR measurement by illuminating the sample surface from several directions employing the optically integrating sphere 84, 85, and collecting back-scattered and transmitted light from several directions. The integrating sphere 84, 85 with white diffusely reflecting inner walls creates a homogeneous and isotropic light field which minimizes blind spots and geometrical hidden mass effects perpendicular to the Y dimension.

Dispersive spectrometers based on InGaAs (indium gallium arsenide) or MCT (mercury cadmium telluride) detectors may be used as sensors, which are not shown in FIGs 8 and 9. The analyzer ideally is able to collect NIR spectra at a very high speed (e.g. 100 spectra per second at each channel), which again facilitates the immediate evaluation of the chemical composition of the sample 82 and thus real-time process control.

In figure 9 the flowing, liquid or particulate sample is guided in a steel tube along the direction F into an inlet 92 and leaves the sphere 94 through the second adapter 95 and then the outlet 95. The first steel tube adapter 95 flattens out the flow diameter in vertical direction along dimension Y into a flat rectangular shape conserving the flow cross section area. Like this similar conditions like in the embodiment of FIG 8 are created and optical thinness of the sample is guaranteed inside the guiding element 91, which is made out of transparent glass and less than 4 mm tick in the Y direction.

The inside guiding element 91 can be as wide as the inside sphere diameter, but not wider.

A multiple of guiding elements inside the sphere 94 can be employed to increase the probed mass while simultaneously maintaining the optical thinness.

The sample is illuminated either directly or indirectly via reflection from the white, diffuse wall of the sphere 94. The light, which has interacted with (reflected from and transmitted through) the sample is then collected for analysis in a continuous fashion. Hence, the chemical components of the flowing sample are monitored online, whereas the gained data can be used for decision taking on the production process of the liquid substance, which is represented by the sample. By sizing the one or more guiding elements 91 and associated tube parts appropriately, either a bypass stream can be sampled or the whole production stream can be sampled.

In particular, pharmaceutical industry is operating under strict regulations regarding quality control of the manufactured products. In order to eliminate the conventional laborious offline laboratory quality control analyses and minimize the storage costs, reliable inline analyses, i.e., real-time release testing methods which are able to assess the product quality during manufacturing are required. The embodiments of all FIGs allow such real-time testing of chemical and pharmaceutical products. The same accounts for medical testing of samples stemming from patients. The results would help the physician to generate a more accurate medical diagnosis.

The embodiment of figure 9 can, in particular, be used for pharmaceutical powders, which are passed to a tablet press.

Besides pharmaceutical industry also the food industry holds potential applications, where the presented methods can be deployed. Possible particulate samples are cereals or pastilles. Also food ingredients can be tested, such as baking flour, sugar or instant mixes etc.

The chemical industry would have a certain interest. For example, polymer samples can be tested to find out their chemical components for either product quality control or re-engineering.

Last but not least environmental analysis, in particular soil analysis, is feasible. For this purpose it might be advisable to process the soil in such a way that it can be treated as a powder. Alternatively, the soil might be tested in granular form or as pellets.

The invention being thus described, it will be obvious that the same may be varied in many ways. Such variations are not to be regarded as a departure from the scope of the invention, and all such modifications as would be obvious to one skilled in the art are intended to be included within the scope of the following claims.

The invention should not be understood as being limited only to the attached claims, but should be understood as including all their legal equivalents.

### REFERENCE NUMERALS USED:

- F: sample flow direction
- Y: vertical dimension

- 1: integrating cavity
- 2: glass tube
- 2a: integrating cavity / optical measurement cavity
- 4: layer of powder
- 6: sample / powder
- 10a: optical on-line measuring apparatus
- 10b: optical on-line measuring apparatus
- 11: round tube
- 11: integrating cavity / optical measurement cavity
- 11a: white, diffusely reflective portion
- 11b: transparent part
- 11c: transparent part
- 11d: tube part
- 11e: output part / connection part
- 11f: means for feeding
- 14: light source
- 13: concave mirror
- 16a: powder or granule particle
- 16b: powder or granule particle
- 16c: powder or granule particle
- 17: mass sensor / weighing machine
- 18: conveyor means / conveyor system
- 19: light detection means
- 20: cross section
- 21: round, glass tube
- 22: diffusely scattering material
- 23: layer of glass
- 26: sample / powder
- 30: cross section
- 31: rectangular tube
- 32: diffusely scattering material
- 33: white, diffusely reflective interior surface / layer of glass
- 36: sample / powder
- 35: hollow core
- 40: cross section
- 41: rectangular tube
- 42: diffusely scattering material
- 43: white, diffusely reflective interior surface / layer of glass
- 45: hollow core
- 46: sample / powder
- 50: cross section
- 51: rectangular tube
- 52: diffusely scattering material
- 53: white, diffusely reflective interior surface / layer of glass
- 53a: protrusions
- 56: sample / powder
- 70: step "start"
- 71: step "illumination"
- 72: step "conveying"
- 73: step "light detection"
- 74: step "integration"
- 75: step "quantitative analysis"
- 76: step "Indication of result"
- 80: optically integrating sphere
- 81: protection glass
- 82: liquid sample
- 83: sample holder
- 84: upper half-sphere
- 85: lower half-sphere
- 86: hinge
- 90: optically integrating sphere
- 91: sample guiding element
- 92: inlet
- 93: outlet
- 94: optically integrating sphere
- 95: adaptor
- 141a: integrating cavity
- 141b: integrating cavity
- 191a: integrating cavity
- 141b: integrating cavity

## Claims

1. Method for measuring a chemical composition of a sample (6, 26, 36, 46, 56, 82) in powder, particle or granule form and comprising at least two chemical components, whereby the method comprises the steps of:
- illuminating (74) an interior of an integrating cavity (1, 2a, 80, 90) by a light source of a wavelength range (14), the integrating cavity (1, 2a, 80, 90) having a white diffusely reflective interior to render light in the integrating cavity (1, 2a, 80, 90) diffuse;
- detecting (79) an optical signal from the integrating cavity (1, 2a, 80, 90) using a sensor (19), and
- indicating (75) the chemical composition of the sample (6, 26, 36, 46, 56, 82) by spectral analysis,
**characterized in** bringing the sample (6, 26, 36, 46, 56, 82) into the integrating cavity (1, 2a, 80, 90) as a stream being conveyed through said integrating cavity, whereby the sample (6, 26, 36, 46, 56, 82) forms an optically thin layer of particles in at least one dimension inside the integrating cavity (1, 2a, 80, 90) and is exposed to the diffuse light of the integrating cavity (1, 2a, 80, 90).

2. Method according to claim 1, **characterized in that** the sample (6, 26, 36, 46, 56, 82) forms a layer of an agricultural product.

3. Method according to claim 1 or 2, **characterized in that** the method also comprises a step for measuring the mass flow rate of the stream of the sample (6, 26, 36, 46, 56, 82) by integrating an output of a mass sensor over a predetermined time interval for generating an integrated mass reading and using said reading to scale the result of the optical analysis.

4. Method according to any of the preceding claims, **characterized in that** the sample (6, 26, 36, 46, 56, 82) consists of chopped hay, silage, wood pellets, food pellets or another chopped agricultural product.

5. Method according to any of the preceding claims, **characterized in that** the output signal from the sensor (19) is integrated (76) for a predetermined time for getting a measured spectrum from a defined amount of the sample (6, 26, 36, 46, 56, 82).

6. Method according to claim 5, **characterized in that** the indication of composition is accomplished by calculating an absorbance spectrum from the measured spectrum and applying a chemometric method to the absorbance spectrum.

7. Method according to claim 6, **characterized in that** a spectral analysis is a quantitative analysis of the measured spectrum.

8. Method according to any of the preceding claims, **characterized in that** the optically thin layer of the sample (6,26,36,46,56,82) is accomplished by one of the following ways:
- the sample (6, 26, 36, 46, 56, 82) falling through a vertical tube;
- the sample (6, 26, 36, 46, 56, 82) flowing on a flat bottom of a rectangular tube (31) having an oblique slope position;
- the sample (6, 26, 36, 46, 56, 82) flowing in parallel grooves along the bottom of a rectangular tube (41,51) having an oblique slope position.

9. Optical measuring apparatus (10a,10b) for indicating a chemical composition of a sample (6, 26, 36, 46, 56, 82) in powder, particle or granule form, comprising:
- an optical measurement cavity (1,2a,80,90) having a white, diffusely reflective interior to render light in the optical measurement cavity (1,2a,80,90) diffuse,
- a light source (14) configured to deliver light of an intended wavelength range into the optical measurement cavity (1,2a,80,90),
- a sensor (19) configured to receive light from the optical measurement cavity (1, 2a, 80, 90),
- means for a converting an output of the sensor (19) into a measured spectrum of the received light, and
- means for indicating the composition of the sample (6, 26, 36, 46, 56, 82) by spectral analysis,
**characterized in that** the optical measurement apparatus (10a,10b) comprises means for bringing (11f) the sample (6, 26, 36, 46, 56, 82) into the optical measurement cavity (1, 2a, 80, 90) as a stream being conveyed through said cavity, whereby the optical measurement cavity (1, 2a, 80, 90) is an integrating cavity (1, 2a, 80, 90) configured to receive an in at least one dimension optically thin layer of the sample (6, 26, 36, 46, 56, 82) to be exposed to the diffuse light of the integrating cavity (1, 2a, 80, 90).

10. Apparatus (10a, 10b) according to claim 9, **characterized in that** the integrating cavity (1, 2a, 80, 90) is configured to generate or receive an optically thin layer of the sample (6, 26, 36, 46, 56, 82), the sample being a sample of an agricultural product.

11. Apparatus (10a, 10b) according to claim 9 or 10, **characterized in that** the means for bringing (11f) the sample (6, 26, 36, 46, 56, 82) into the optical measurement cavity (1, 2a, 80, 90) assure an optical thinness of the sample (6, 26, 36,46 ,56 ,82).

12. Apparatus (10a, 10b) according to any of the claims 9 to 11, **characterized in that** the optical measurement apparatus (10a, 10b) is configured to accomplish the spectral analysis by calculating an absorbance spectrum from the measured spectrum and applying a chemometric method to the absorbance spectrum.

13. Apparatus (10a, 10b) according to any of the claims 9 to 12, **characterized in that** the measuring apparatus (10a, 10b) is an optical online measuring apparatus (10a,10b).

14. Apparatus (10a,10b) according to any of the claims 9 to 13, **characterized in that** the integrating cavity (1, 2a ,80, 90) comprises a round tube (11, 21) having a white, diffusely reflective portion (11a) on an interior surface or on the outer surface at least in the middle of the round tube (11) .

15. Apparatus (10a, 10b) according to claim 14, **characterized in that** the integrating cavity (1, 2a, 80, 90) comprises a rectangular tube (31, 41, 51) having a white, diffusely reflective interior surface (33,43,53).

16. Apparatus (10a, 10b) according to any of the claims 14 to 15, **characterized in that** the interior surfaces are covered by a layer of glass (23, 33,43, 53).

17. Apparatus (10a, 10b) according to any of the claims 14 to 16, **characterized in that** the light source (14) is positioned inside the optical measurement cavity (1, 2a, 80, 90).

18. Apparatus (10a, 10b) according to any of the claims 14 to 17, **characterized in that** a bottom side of the rectangular tube (41, 51) includes several longitudinal V-shaped or rectangular grooves that are configured to separate and guide the sample (6, 26 ,36 ,46 ,56 ,82) to flow as an optically thin sample (6, 26 ,36 ,46 ,56 ,82) along the bottom side of the rectangular tube (31, 41, 51).

19. Apparatus (10a,10b) according to claim 13, **characterized in that** the apparatus (10a,10b) is configured for letting the sample (6, 26, 36, 46, 56, 82) fall or travel through the round tube (11) due to gravity or overpressure, respectively.

20. Apparatus (10a, 10b) according to any of the claims 9 to 19, **characterized in that** the apparatus (10a, 10b) is configured for letting the sample (6, 26 ,36 ,46 ,56 ,82) flow along the bottom side of the sloped integrating cavity (1, 2a ,80, 90).

## Patentansprüche

1. Verfahren zum Messen einer chemischen Zusammensetzung einer Probe (6, 26, 36, 46, 56, 82) in Pulver-, Partikel- oder Granulatform und umfassend mindesten zwei chemische Komponenten, wobei das Verfahren die Schritte umfasst:
- Beleuchten (74) eines Inneren eines integrierenden Hohlraums (1, 2a, 80, 90) durch eine Lichtquelle eines Wellenlängenbereichs (14),
wobei der integrierende Hohlraum (1, 2a, 80, 90) ein weißes, diffus reflektierendes Inneres aufweist, um Licht in dem integrierenden Hohlraum (1, 2a, 80, 90) diffus zu machen;
- Erfassen (79) eines optischen Signals aus dem integrierenden Hohlraum (1, 2a, 80, 90) unter Verwendung eines Sensors (19) und
- Angeben (75) der chemischen Zusammensetzung der Probe (6, 26, 36, 46, 56, 82) durch Spektralanalyse,
**gekennzeichnet durch** Einbringen der Probe (6, 26, 36, 46, 56, 82) in den integrierenden Hohlraum (1, 2a, 80, 90) als einen Strom, der durch den integrierenden Hohlraum befördert wird, wobei die Probe (6, 26, 36, 46, 56, 82) eine optisch dünne Schicht von Partikeln in mindestens einer Dimension im Inneren des integrierenden Hohlraums (1, 2a, 80, 90) bildet und dem diffusen Licht des integrierenden Hohlraums (1, 2a, 80, 90) ausgesetzt ist.

2. Verfahren nach Anspruch 1, **dadurch gekennzeichnet, dass** die Probe (6, 26, 36, 46, 56, 82) eine Schicht eines landwirtschaftlichen Produkts bildet.

3. Verfahren nach Anspruch 1 oder 2, **dadurch gekennzeichnet, dass** das Verfahren auch einen Schritt zum Messen der Massenströmungsrate des Stroms der Probe (6, 26, 36, 46, 56, 82) durch Integrieren eines Ausgangs eines Massesensors über ein vorbestimmtes Zeitintervall, um eine integrierte Masseablesung zu erzeugen, und Verwenden der Ablesung zum Skalieren des Ergebnisses der optischen Analyse umfasst.

4. Verfahren nach einem der vorstehenden Ansprüche, **dadurch gekennzeichnet, dass** die Probe (6, 26, 36, 46, 56, 82) aus geschnittenem Heu, Silage, Holzpellets, Nahrungsmittelpellets oder einem anderen geschnittenen landwirtschaftlichen Produkt besteht.

5. Verfahren nach einem der vorstehenden Ansprüche, **dadurch gekennzeichnet, dass** das Ausgangssignal von dem Sensor (19) für eine vorbestimmte Zeit integriert wird (76), um ein gemessenes Spektrum aus einer definierten Menge der Probe (6, 26, 36, 46, 56, 82) zu erlangen.

6. Verfahren nach Anspruch 5, **dadurch gekennzeichnet, dass** die Angabe einer Zusammensetzung durch Berechnen eines Extinktionsspektrums aus dem gemessenen Spektrum und Anwenden eines chemometrischen Verfahrens an dem Extinktionsspektrum erfolgt.

7. Verfahren nach Anspruch 6, **dadurch gekennzeichnet, dass** eine Spektralanalyse eine quantitative Analyse des gemessenen Spektrums ist.

8. Verfahren nach einem der vorstehenden Ansprüche, **dadurch gekennzeichnet, dass** die optisch dünne Schicht der Probe (6, 26, 36, 46, 56, 82) auf eine der folgenden Weisen erreicht wird:
- die Probe (6, 26, 36, 46, 56, 82) fällt durch ein vertikales Rohr;
- die Probe (6, 26, 36, 46, 56, 82) fließt auf einem flachen Boden eines rechteckigen Rohrs (31) mit einer schrägen Neigungsposition;
- die Probe (6, 26, 36, 46, 56, 82) fließt in parallelen Rillen entlang des Bodens eines rechteckigen Rohrs (41,51) mit einer schrägen Neigungsposition.

9. Optische Messeinrichtung (10a, 10b) zum Angeben einer chemischen Zusammensetzung einer Probe (6, 26, 36, 46, 56, 82) in Pulver-, Partikel- oder Granulatform, umfassend:
- einen optischen Messhohlraum (1, 2a, 80, 90), der ein weißes, diffus reflektierendes Inneres aufweist, um Licht in dem optischen Messhohlraum (1, 2a, 80, 90) diffus zu machen;
- eine Lichtquelle (14), die konfiguriert ist, Licht eines geplanten Wellenlängenbereichs in den optischen Messhohlraum (1, 2a, 80, 90) abzugeben,
- einen Sensor (19), der konfiguriert ist, Licht von dem optischen Messhohlraum (1, 2a, 80, 90) zu empfangen,
- Mittel zum Umwandeln eines Ausgangs des Sensors (19) in ein gemessenes Spektrum des empfangenen Lichts und
- Mittel zum Angeben der Zusammensetzung der Probe (6, 26, 36, 46, 56, 82) durch Spektralanalyse,
**dadurch gekennzeichnet, dass** die optische Messeinrichtung (10a, 10b) Mittel zum Einbringen (11f) der Probe (6, 26, 36, 46, 56, 82) in den optischen Messhohlraum (1, 2a, 80, 90) als einen Strom umfasst, der durch den Hohlraum befördert wird, wobei der optische Messhohlraum (1, 2a, 80, 90) ein integrierender Hohlraum (1, 2a, 80, 90) ist, der konfiguriert ist, eine in mindestens einer Dimension optisch dünne Schicht der Probe (6, 26, 36, 46, 56, 82) aufzunehmen, die dem diffusen Licht des integrierenden Hohlraums (1, 2a, 80, 90) auszusetzen ist.

10. Einrichtung (10a, 10b) nach Anspruch 9, **dadurch gekennzeichnet, dass** der integrierende Hohlraum (1, 2a, 80, 90) konfiguriert ist, eine optisch dünne Schicht der Probe (6, 26, 36, 46, 56, 82) aufzunehmen, wobei die Probe eine Probe eines landwirtschaftlichen Produkts ist.

11. Einrichtung (10a, 10b) nach Anspruch 9 oder 10, **dadurch gekennzeichnet, dass** die Mittel zum Einbringen (11f) der Probe (6, 26, 36, 46, 56, 82) in den optischen Messhohlraum (1, 2a, 80, 90) eine optische Dünnheit der Probe (6, 26, 36, 46, 56, 82) sicherstellen.

12. Einrichtung (10a, 10b) nach einem der Ansprüche 9 bis 11, **dadurch gekennzeichnet, dass** die optische Messeinrichtung (10a, 10b) konfiguriert ist, die Spektralanalyse durch Berechnen eines Extinktionsspektrums aus dem gemessenen Spektrum und Anwenden eines chemometrischen Verfahrens an dem Extinktionsspektrum durchzuführen.

13. Einrichtung (10a, 10b) nach einem der Ansprüche 9 bis 12, **dadurch gekennzeichnet, dass** die Messeinrichtung (10a, 10b) eine optische Online-Messeinrichtung (10a, 10b) ist.

14. Einrichtung (10a, 10b) nach einem der Ansprüche 9 bis 13, **dadurch gekennzeichnet, dass** der integrierende Hohlraum (1, 2a, 80, 90) ein rundes Rohr (11, 21) umfasst, das einen weißen, diffus reflektierenden Abschnitt (11a) an einer Innenfläche oder an der Außenfläche mindestens in der Mitte des runden Rohrs (11) aufweist.

15. Einrichtung (10a, 10b) nach Anspruch 14, **dadurch gekennzeichnet, dass** der integrierende Hohlraum (1, 2a, 80, 90) ein rechteckiges Rohr (31, 41, 51) umfasst, das eine weiße, diffus reflektierende Innenfläche (33, 43, 53) aufweist.

16. Einrichtung (10a, 10b) nach einem der Ansprüche 14 bis 15, **dadurch gekennzeichnet, dass** die Innenflächen von einer Glasschicht (23, 33, 43, 53) bedeckt sind.

17. Einrichtung (10a, 10b) nach einem der Ansprüche 14 bis 16, **dadurch gekennzeichnet, dass** die Lichtquelle (14) im Inneren des optischen Messhohlraums (1, 2a, 80, 90) positioniert ist.

18. Einrichtung (10a, 10b) nach einem der Ansprüche 14 bis 17, **dadurch gekennzeichnet, dass** eine Bodenseite des rechteckigen Rohrs (41, 51) mehrere längliche V-förmige oder rechteckige Rillen enthält, die konfiguriert sind, die Probe (6, 26, 36, 46, 56, 82) zu trennen und zu führen, um als eine optisch dünne Probe (6, 26, 36, 46, 56, 82) entlang der Bodenseite des rechteckigen Rohrs (31, 41, 51) zu fließen.

19. Einrichtung (10a, 10b) nach Anspruch 13, **dadurch gekennzeichnet, dass** die Einrichtung (10a, 10b) konfiguriert ist, die Probe (6, 26, 36, 46, 56, 82) aufgrund von Schwerkraft oder Überdruck durch das runde Rohr (11) fallen bzw. sich bewegen zu lassen.

20. Einrichtung (10a, 10b) nach einem der Ansprüche 9 bis 19, **dadurch gekennzeichnet, dass** die Einrichtung (10a, 10b) konfiguriert ist, die Probe (6, 26, 36, 46, 56, 82) entlang der Bodenseite des geneigten integrierenden Hohlraums (1, 2a, 80, 90) fließen zu lassen.

## Revendications

1. Procédé de mesure d'une composition chimique d'un échantillon (6, 26, 36, 46, 56, 82) sous forme de poudre, de particule ou de granulé et comprenant au moins deux composants chimiques, selon lequel le procédé comprend les étapes consistant à :
- éclairer (74) un intérieur d'une cavité d'intégration (1, 2a, 80, 90) par une source de lumière d'une plage de longueur d'onde (14), la cavité d'intégration (1, 2a, 80, 90) présentant un intérieur blanc à réflexion diffuse pour rendre de la lumière dans la cavité d'intégration (1, 2a, 80, 90) diffuse ;
- détecter (79) un signal optique à partir de la cavité d'intégration (1, 2a, 80, 90) en utilisant un capteur (19), et
- indiquer (75) la composition chimique de l'échantillon (6, 26, 36, 46, 56, 82) par analyse spectrale,
**caractérisé en** amenant l'échantillon (6, 26, 36, 46, 56, 82) dans la cavité d'intégration (1, 2a, 80, 90) comme un courant étant transporté à travers ladite cavité d'intégration, selon lequel l'échantillon (6, 26, 36, 46, 56, 82) forme une couche de particules optiquement mince dans au moins une dimension à l'intérieur de la cavité d'intégration (1, 2a, 80, 90) et est exposé à la lumière diffuse de la cavité d'intégration (1, 2a, 80, 90).

2. Procédé selon la revendication 1, **caractérisé en ce que** l'échantillon (6, 26, 36, 46, 56, 82) forme une couche d'un produit agricole.

3. Procédé selon la revendication 1 ou 2, **caractérisé en ce que** le procédé comprend également une étape de mesure du débit massique du courant de l'échantillon (6, 26, 36, 46, 56, 82) en intégrant une sortie d'un capteur de masse sur un intervalle de temps prédéterminé pour générer une lecture de masse intégrée et utiliser ladite lecture pour mettre à l'échelle le résultat de l'analyse optique.

4. Procédé selon l'une quelconque des revendications précédentes, **caractérisé en ce que** l'échantillon (6, 26, 36, 46, 56, 82) consiste en du foin haché, de l'ensilage, des granulés de bois, des granulés alimentaires ou un autre produit agricole haché.

5. Procédé selon l'une quelconque des revendications précédentes, **caractérisé en ce que** le signal de sortie du capteur (19) est intégré (76) pendant un moment prédéterminé pour obtenir un spectre mesuré d'une quantité définie de l'échantillon (6, 26, 36, 46, 56, 82).

6. Procédé selon la revendication 5, **caractérisé en ce que** l'indication de composition est accomplie en calculant un spectre d'absorbance depuis le spectre mesuré et en appliquant un procédé chimiométrique au spectre d'absorbance.

7. Procédé selon la revendication 6, **caractérisé en ce qu'**une analyse spectrale est une analyse quantitative du spectre mesuré.

8. Procédé selon l'une quelconque des revendications précédentes, **caractérisé en ce que** la couche optiquement mince de l'échantillon (6, 26, 36, 46, 56, 82) est accomplie d'une des manières suivantes :
- l'échantillon (6, 26, 36, 46, 56, 82) tombant à travers un tube vertical ;
- l'échantillon (6, 26, 36, 46, 56, 82) circulant sur un fond plat d'un tube rectangulaire (31) présentant une position de pente oblique ;
- l'échantillon (6, 26, 36, 46, 56, 82) circulant en rainures parallèles le long du fond d'un tube rectangulaire (41, 51) présentant une position de pente oblique.

9. Appareil de mesure optique (10a, 10b) pour indiquer une composition chimique d'un échantillon (6, 26, 36, 46, 56, 82) sous forme de poudre, de particule ou de granulé, comprenant :
- une cavité de mesure optique (1, 2a, 80, 90) présentant un intérieur blanc à réflexion diffuse pour rendre de la lumière dans la cavité de mesure optique (1, 2a, 80, 90) diffuse,
- une source de lumière (14) configurée pour délivrer de la lumière d'une plage de longueur d'onde prévue dans la cavité de mesure optique (1, 2a, 80, 90),
- un capteur (19) configuré pour recevoir de la lumière de la cavité de mesure optique (1, 2a, 80, 90),
- un moyen de convertir une sortie du capteur (19) en un spectre mesuré de la lumière reçue, et
- un moyen d'indiquer la composition de l'échantillon (6, 26, 36, 46, 56, 82) par analyse spectrale,
**caractérisé en ce que** l'appareil de mesure optique (10a, 10b) comprend un moyen d'amener (11f) l'échantillon (6, 26, 36, 46, 56, 82) dans la cavité de mesure optique (1, 2a, 80, 90) comme un courant étant transporté à travers ladite cavité, selon lequel la cavité de mesure optique (1, 2a, 80, 90) est une cavité d'intégration (1, 2a, 80, 90) configurée pour recevoir une couche optiquement mince dans au moins une dimension de l'échantillon (6, 26, 36, 46, 56, 82) à exposer à la lumière diffuse de la cavité d'intégration (1, 2a, 80, 90).

10. Appareil (10a, 10b) selon la revendication 9, **caractérisé en ce que** la cavité d'intégration (1, 2a, 80, 90) est configurée pour générer ou recevoir une couche optiquement mince de l'échantillon (6, 26, 36, 46, 56, 82), l'échantillon étant un échantillon d'un produit agricole.

11. Appareil (10a, 10b) selon la revendication 9 ou 10, **caractérisé en ce que** le moyen d'amener (11f) l'échantillon (6, 26, 36, 46, 56, 82) dans la cavité de mesure optique (1, 2a, 80, 90) assure une minceur optique de l'échantillon (6, 26, 36, 46, 56, 82).

12. Appareil (10a, 10b) selon l'une quelconque des revendications 9 à 11, **caractérisé en ce que** l'appareil de mesure optique (10a, 10b) est configuré pour accomplir l'analyse spectrale en calculant un spectre d'absorbance depuis le spectre mesuré et en appliquant un procédé chimiométrique au spectre d'absorbance.

13. Appareil (10a, 10b) selon l'une quelconque des revendications 9 à 12, **caractérisé en ce que** l'appareil de mesure (10a, 10b) est un appareil de mesure optique en ligne (10a, 10b).

14. Appareil (10a, 10b) selon l'une quelconque des revendications 9 à 13, **caractérisé en ce que** la cavité d'intégration (1, 2a, 80, 90) comprend un tube rond (11, 21) présentant une portion blanche à réflexion diffuse (11a) sur une surface intérieure ou sur la surface extérieure au moins au milieu du tube rond (11).

15. Appareil (10a, 10b) selon la revendication 14, **caractérisé en ce que** la cavité d'intégration (1, 2a, 80, 90) comprend un tube rectangulaire (31, 41, 51) présentant une surface intérieure blanche à réflexion diffuse (33, 43, 53).

16. Appareil (10a, 10b) selon l'une quelconque des revendications 14 à 15, **caractérisé en ce que** les surfaces intérieures sont recouvertes d'une couche de verre (23, 33, 43, 53).

17. Appareil (10a, 10b) selon l'une quelconque des revendications 14 à 16, **caractérisé en ce que** la source de lumière (14) est positionnée à l'intérieur de la cavité de mesure optique (1, 2a, 80, 90).

18. Appareil (10a, 10b) selon l'une quelconque des revendications 14 à 17, **caractérisé en ce qu'**un côté de fond du tube rectangulaire (41, 51) inclut plusieurs rainures longitudinales en forme de V ou rectangulaires qui sont configurées pour séparer et guider l'échantillon (6, 26, 36, 46, 56, 82) pour circuler comme un échantillon optiquement mince (6, 26, 36, 46, 56, 82) le long du côté de fond du tube rectangulaire (31, 41, 51).

19. Appareil (10a, 10b) selon la revendication 13, **caractérisé en ce que** l'appareil (10a, 10b) est configuré pour laisser l'échantillon (6, 26, 36, 46, 56, 82) tomber ou se déplacer à travers le tube rond (11) en raison de la pesanteur ou de la surpression, respectivement.

20. Appareil (10a, 10b) selon l'une quelconque des revendications 9 à 19, **caractérisé en ce que** l'appareil (10a, 10b) est configuré pour laisser l'échantillon (6, 26, 36, 46, 56, 82) circuler le long du côté de fond de la cavité d'intégration inclinée (1, 2a, 80, 90).
